# EUROPÄISCHE PATENTANMELDUNG

(11) **EP 4 778 660 A1**
(43) Veröffentlichungstag der Anmeldung: **22.07.2026**
(21) Anmeldenummer: 25201383.4
(22) Anmeldetag: 10.09.2025
(51) Int. Cl.: B23K 1/20, B23K 3/08, H01M 50/516

(54) **VORRICHTUNG, VERWENDUNG UND VERFAHREN ZUM BEARBEITEN VON ZELLKONTAKTSYSTEMEN**

(30) Priorität: 15.01.2025 EP 25152131
(71) Anmelder: Grob-Werke GmbH & Co. KG, 87719 Mindelheim (DE)
(72) Erfinder: Riemer, Oliver, 86830 Schwabmünchen (DE); Hofmann, Konstantin, 87719 Mindelheim (DE); Schylla, Lukas, 87719 Mindelheim (DE); Varga, Andrea, 86517 Wehringen (DE)
(74) Vertreter: KASTEL Patentanwälte PartG mbB

(57) **Zusammenfassung**

Zur Verbesserung einer Serienfertigung von Zellkontaktsystemen (12) im Rahmen der Großserienherstellung von Batterieclustern, wie sie z.B. in Batterien von Elektrofahrzeugen Verwendung finden, schafft die Erfindung eine Zellkontaktsystembearbeitungsvorrichtung (10) zum Bearbeiten von Zellkontaktsystemen (12), die zum elektrischen Verbinden von Batteriezellen zu einem Batteriecluster dienen, wobei die Zellkontaktsystembearbeitungsvorrichtung (10) eine Flussmittelaufbringeinrichtung (16), die zum selektiven Auftragen von Flussmittel auf zumindest einen vorbestimmten Bereich (18) von zumindest einem Zellkontaktsystem (12) ausgebildet ist, und eine Flussmitteltrocknungseinrichtung (20) aufweist, die zum Trocknen und/oder Aushärten des durch die Flussmittelaufbringeinrichtung (16) aufgetragenen Flussmittels durch gezieltes Aufbringen von Wärmeenergie auf den zumindest einen vorbestimmten Bereich (18) ausgebildet ist.

## Beschreibung

Die Erfindung betrifft eine Zellkontaktsystembearbeitungsvorrichtung zum Bearbeiten von Zellkontaktsystemen, die zum elektrischen Verbinden von Batteriezellen zu einem Batteriecluster dienen. Weiter betrifft die Erfindung eine Verwendung einer solchen Zellkontaktsystembearbeitungsvorrichtung zum Aufbringen von Flussmittel. Weiter betrifft die Erfindung ein Zellkontaktsystembearbeitungsverfahren zum Bearbeiten von Zellkontaktsystemen, die zum elektrischen Verbinden von Batteriezellen zu einem Batteriecluster dienen, um Flussmittel auf vorbestimmte Bereiche der Zellkontaktsysteme aufzubringen und zu trocknen. Schließlich betrifft die Erfindung eine Steuerung, die dazu eingerichtet ist. eine Zellkontaktsystembearbeitungsvorrichtung zum Durchführen des Zellkontaktsystembearbeitungsverfahren anzusteuern.

Bevorzugte Ausführungsformen der Vorrichtung, der Verwendung und des Verfahrens sowie der Steuerung gemäß der Erfindung beziehen sich auf die Herstellung von Batterieclustern, wie insbesondere Batteriemodulen und/oder Batteriepacks. Insbesondere beziehen sich bevorzugte Ausführungsformen der Erfindung auf die Verwendung, weiter insbesondere das Aufbringen und Trocknen, von Flussmitteln bei Zellkontaktsystemen, die auch als Zellkontaktiersysteme bezeichnet werden können.

Zellkontaktiersysteme werden dazu eingesetzt, eine Mehrzahl von Batteriezellen elektrisch zu einem Batteriecluster, wie beispielsweise einem Batteriemodul und/oder einem Batteriepack zu verbinden. Zellkontaktiersysteme weisen in der Regel mehrere Materialien, wie ein Metall oder eine Metalllegierung, insbesondere Aluminium, sowie Kunststoffe auf. Ein Defekt einer (oder mehrerer) in einem solchen Batteriecluster vorhandenen Batteriezelle kann zu einer Überhitzung und im schlimmsten Fall zum Brennen der defekten Batteriezelle führen, was sich über das Zellkontaktiersystem auf das gesamte Batteriecluster ausbreiten kann. Um dies zu verhindern, können im Zellkontaktiersystem sogenannte thermische Sollbruchstellen vorgesehen werden, d.h., Bereiche, die derart definiert sind, dass sie im Falle einer (starken) Überhitzung und/oder eines Brennens einer Batteriezelle durchschmelzen und somit die Ausbreitung auf das restliche Batteriecluster verhindern.

Die Sollbruchstellen können zusätzlich mit einem sogenannten Flussmittel versehen werden, das ein Aufschmelzen des Materials im Bereich der Sollbruchstelle im Falle einer wie vorstehend beschriebenen defekten Batteriezelle fördert, da das Flussmittel die Schmelztemperatur des Materials der Sollbruchstellen herabsetzt. Darüber hinaus kann das Flussmittel die Bildung von Oxidschichten an den Sollbruchstellen verhindern. Solche Oxidschichten können ein vollständiges Aufschmelzen der Sollbruchstelle unterbinden, indem sie eine Art Brücke zwischen dem Kathodenbereich und dem Anodenbereich bilden, wodurch der Anodenbereich und der Kathodenbereich weiterhin kontaktiert sind, auch wenn die Sollbruchstelle aufgeschmolzen ist. Somit kann ein Vorsehen des Flussmittels auf der Sollbruchstelle ein vollständiges Aufschmelzen, und somit ein Unterbrechen der Verbindung zwischen dem Anodenbereich und dem Kathodenbereich, gewährleisten.

Die sogenannten Flussmittel sind Stoffe, die beim Löten zugegeben werden, um eine bessere Benetzung der zu verlötenden Werkstücke durch das Lot zu bewirken. Hierbei reduziert das Flussmittel während des Lötvorgangs die heiße Oberfläche der zu verbindenden Werkstücke sowie des flüssigen Lots. Darüber hinaus wird die Oberflächenspannung des flüssigen Lots durch das Flussmittel vermindert.

Hier ist es bekannt, das Flussmittel auf die zu lötenden Bereiche aufzubringen, die Bereiche zu verlöten und das Flussmittel nach dem Lötvorgang auszuhärten bzw. zu trocknen, um eine spätere Korrosion der verlöteten Bauteile durch in dem Flussmittel enthaltener Feuchtigkeit, insbesondere Wasser, zu verhindern. Zum Aushärten und/oder Trocknen des aufgetragenen Flussmittels werden derzeit Konvektionsöfen eingesetzt. Hierfür muss der gesamte Bauteilverbund in den Konvektionsofen eingebracht werden und somit wird der gesamte Bauteilverbund der zum Aushärten des Flussmittels optimalen Temperatur-Arbeitstemperatur - ausgesetzt. Das bedeutet, dass die Temperatureinwirkung bei Konvektionsöfen nicht lokal auf abgegrenzte Bereiche beschränkt werden kann, sodass die Temperatureinwirkung immer vollflächig auf den gesamten Bauteilverbund erfolgt. Dies führt unter anderem dann zu Problemen, wenn der Bauteilverbund mehrere, unterschiedliche Materialien einschließlich eines temperatursensiblen Materials aufweist. Beispielsweise kann der Bauteilverbund aus mehreren Bauteilen oder Komponenten aufgebaut sein, die jeweils unterschiedliche Materialien aufweisen. Probleme können insbesondere dann auftreten, wenn von den unterschiedlichen Materialien zumindest eines - oder auch mehrere - eine thermische Zerstörschwelle aufweist, die unterhalb der eigentlichen Arbeitstemperatur im Aushärteprozess liegt. Dies kann zu thermischen Zersetzungsprozessen dieser Komponenten führen, die einen Verlust der mechanischen Eigenschaften zur Folge haben. Insbesondere Kunststoffe können hiervon betroffen sein. Ein Aushärten mit einer Temperatur unterhalb der eigentlichen Arbeitstemperatur, die nicht zu thermischen Zersetzungsprozessen der Komponenten-Materialien führt, ist möglich, führt jedoch zu verlängerten Aushärtezeiten, die bei einer Serienfertigung schnell zu langen Taktzeiten führen können, und insbesondere unter Umständen für in der Serienfertigung übliche bzw. gewünschte Taktzeiten nicht akzeptabel sind.

Darüber hinaus ist ein serielles Aufbringen des Flussmittels, d.h., ein Aufbringen des Flussmittels Bereich für Bereich, auf zu lötende Bereiche bei einer Vielzahl an zu lötenden Bereichen schnell sehr zeitintensiv und kann somit bei einer Serienfertigung schnell zu langen Taktzeiten führen.

Die Erfindung hat sich zur Aufgabe gestellt, eine verbesserte Serienfertigung von Zellkontaktsystemen mit zumindest einer thermischen Sollbruchstelle zu ermöglichen.

Zum Lösen dieser Aufgabe schafft die Erfindung eine Zellkontaktsystembearbeitungsvorrichtung nach Anspruch 1. Eine vorteilhafte Verwendung der Zellkontaktsystembearbeitungsvorrichtung, ein damit durchführbares Zellkontaktsystembearbeitungsverfahren sowie eine Steuerung für die Zellkontaktsystembearbeitungsvorrichtung sind Gegenstand der weiteren unabhängigen Ansprüche.

Vorteilhafte Ausgestaltungen sind Gegenstand der Unteransprüche.

Die Erfindung schafft gemäß einem ersten Aspekt davon eine Zellkontaktsystembearbeitungsvorrichtung zum Bearbeiten von Zellkontaktsystemen, die zum elektrischen Verbinden von Batteriezellen zu einem Batteriecluster - dies kann beispielsweise ein Batteriemodul und/oder ein Batteriepack sein - dienen, wobei die Zellkontaktsystembearbeitungsvorrichtung eine Flussmittelaufbringeinrichtung, die zum selektiven Auftragen von Flussmittel auf zumindest einen vorbestimmten Bereich von zumindest einem Zellkontaktsystem ausgebildet ist, und eine Flussmitteltrocknungseinrichtung aufweist, die zum Trocknen und/oder Aushärten des durch die Flussmittelaufbringeinrichtung aufgetragenen Flussmittels durch gezieltes Aufbringen von Wärmeenergie auf den zumindest einen vorbestimmten Bereich ausgebildet ist.

Bei besonders bevorzugten Ausführungsformen sind die verschiedenen Stationen oder Einrichtungen der Zellkontaktsystembearbeitungsvorrichtung alle in ein Gesamtsystem integriert. Dabei funktioniert also nicht jede Station für sich separat, sondern im Verbund und insbesondere unter gemeinsamer Steuerung mit den anderen Stationen. Die Stationen/Einrichtungen sind vorzugsweise nicht über Transport- u/o Fördersysteme miteinander verbunden, sondern stellen ein geschlossenes Gesamtsystem dar. Man kann also auch sagen, dass besonders bevorzugte Ausführungsformen der Zellkontaktsystembearbeitungsvorrichtung als ein geschlossenes Gesamtsystem ausgeführt sind, in dem die verschiedenen Stationen oder Einrichtungen über die gemeinsame Steuerung miteinander verkettet sind.

Bei einigen Ausführungsformen ist vorgesehen, dass die Flussmittelaufbringeinrichtung und die Flussmitteltrocknungseinrichtung gemeinsam in einem Gesamtgehäuse angeordnet sind.

Bei einigen Ausführungsformen ist vorgesehen, dass die

Zellkontaktsystembearbeitungsvorrichtung als geschlossenes Gesamtsystem ausgebildet ist, in dem die Einrichtungen der Zellkontaktsystembearbeitungsvorrichtung integriert sind. Insbesondere sind die Einrichtungen der Zellkontaktsystembearbeitungsvorrichtung hierbei steuerungstechnisch miteinander verkettet.

Bei einigen Ausführungsformen ist vorgesehen, dass die Flussmittelaufbringeinrichtung in einem Flussmittelauftragsbereich der Zellkontaktsystembearbeitungsvorrichtung angeordnet ist.

Bei einigen Ausführungsformen ist vorgesehen, dass die Flussmittelaufbringeinrichtung zum automatisierten, insbesondere computergesteuerten, Aufbringen des Flussmittels auf den zumindest einen vorbestimmten Bereich ausgebildet ist.

Bei einigen Ausführungsformen ist vorgesehen, dass die Flussmittelaufbringeinrichtung eine Applikationseinheit aufweist, die relativ zu dem zumindest einen Zellkontaktsystem beweglich ausgebildet ist. Bei einigen Ausführungsformen weist die Flussmittelaufbringeinrichtung wenigstens einen Dispenser oder auch mehrere Dispenser auf.

Bei einigen Ausführungsformen ist vorgesehen, dass die Flussmittelaufbringeinrichtung eine Flussmittelaufbring-Prüfeinrichtung aufweist, die dazu eingerichtet ist, die Position(en) des zumindest einen vorbestimmten Bereichs, auf die das Flussmittel aufzubringen ist, zu bestimmen und/oder eine Position, eine Auftragsfläche und/oder einen Konturverlauf des aufgebrachten Flussmittels zu bestimmen oder zu prüfen. Hierbei ist es denkbar, dass die Flussmittelaufbring-Prüfeinrichtung Kl-unterstützt arbeitet. Bei einigen Ausführungsformen weist die Flussmittelaufbring-Prüfeinrichtung eine computerimplementierte Steuereinheit auf, die dazu eingerichtet ist, mittels Maschinen-Learning den zumindest einen vorbestimmten Bereich zu erkennen und/oder mittels Maschinen-Learning den Flussmitteauftrag zu prüfen.

Bei einigen Ausführungsformen ist die Flussmittelaufbring-Prüfeinrichtung zum Prüfen des Flussmittelauftrags vor und/oder nach dem Aushärten eingerichtet. Bei einigen Ausführungsformen ist pro Dispenser eine Prüfeinrichtung vorgesehen. Bei einigen Ausführungsformen ist die Prüfeinrichtung zur gemeinsamen Bewegung mit einer zugeordneten Applikationseinheit oder einem zugeordneten Dispenser eingerichtet. Alternativ kann auch eine Prüfeinrichtung, insbesondere mit eigener Achse (Achse bedeutet hier insbesondere Bewegungsmechanismus mit Aktor) vorgesehen sein, die für mehrere oder alle Dispenser prüft - alles "on-the-fly". Es kann auch eine Kombination aus Prüfeinrichtungen, die jeweils einem Dispenser zugeordnet sind, und einer Prüfeinrichtung mit eigener Achse zur Prüfung des Flussmittelauftrags mehrerer Dispenser vorgesehen sein.

Bei einigen Ausführungsformen weist die Applikationseinheit wenigstens ein Greifsystem oder alternativ auch ein Haltesystem auf, wobei das Greifsystem oder Haltesystem in allen Raumrichtungen verstellbar oder verfahrbar ist.

Bei einigen Ausführungsformen weist die Applikationseinheit wenigstens eine Dosiereinrichtung zum Aufbringen von Flussmittel auf.

Bei einigen Ausführungsformen weist die Applikationseinheit eine erste und eine zweite Dosiereinrichtung zum Aufbringen von Flussmittel auf, wobei die erste und die zweite Dosiereinrichtung relativ zueinander beweglich ausgebildet sind.

Dabei ist bei einigen Ausführungsformen vorgesehen, dass jede Dosiereinrichtung gemeinsam und nochmals für sich verstellbar ist.

Dabei ist bei einigen Ausführungsformen vorgesehen, dass die Dosiereinrichtungen parallel, synchron oder asynchron gesteuert bewegbar sind.

Dabei ist bei einigen Ausführungsformen vorgesehen, dass die Dosiereinrichtungen einzeln gesteuert bewegbar sind.

Bei einigen Ausführungsformen weist die Applikationseinheit eine Verfahreinheit auf, die dazu eingerichtet ist, die Applikationseinheit oder ein Element derselben, wie insbesondere ein Greifsystem (oder Haltesystem), oder eine oder mehrere Dosiereinrichtungen zu verfahren. Bei einigen Ausführungsformen ist die Verfahreinheit dazu eingerichtet, die Applikationseinheit oder dessen Element mit einer Verfahrgeschwindigkeit von bis zu 3000 mm/s, insbesondere zwischen 300 mm/s und 950 mm/s, weiter insbesondere zwischen 450 mm/s und 750 mm/s zu verfahren. Bei einigen Ausführungsformen ist die Verfahreinheit dazu eingerichtet, die Applikationseinheit oder dessen Element während eines Flussmittelauftrags zu verfahren.

Bei einigen Ausführungsformen ist die Flussmittelaufbring-Prüfeinrichtung an der Applikationseinheit angeordnet. Bei einigen Ausführungsformen ist die Flussmittelaufbring-Prüfeinrichtung separat zu der Applikationseinheit ausgeführt.

Bei einigen Ausführungsformen weist die Flussmittelaufbring-Prüfeinrichtung wenigstens eine Kamera und/oder einen Sensor als Prüfeinheit auf.

Bei einigen Ausführungsformen ist die Flussmittelaufbring-Prüfeinrichtung beweglich ausgebildet und dazu eingerichtet, eine Prüfung während der Bewegung durchzuführen.

Bei einigen Ausführungsformen weist die Flussmittelaufbring-Prüfeinrichtung eine Profilerfassungseinheit zur Erfassung wenigstens eines Profils oder einer Kontur des zu prüfenden Zellkontaktsystems auf.

Bei einigen Ausführungsformen weist die Flussmittelaufbring-Prüfeinrichtung eine in einer Bewegungsrichtung vor einer Dosiereinrichtung zum Aufbringen des Flussmittels angeordnete Prüfeinheit auf.

Bei einigen Ausführungsformen weist die Flussmittelaufbring-Prüfeinrichtung eine in einer Bewegungsrichtung nach einer Dosiereinrichtung zum Aufbringen des Flussmittels angeordnete Prüfeinheit auf.

Bei einigen Ausführungsformen ist die Flussmitteltrocknungseinrichtung in einem Flussmitteltrocknungsbereich der Zellkontaktsystembearbeitungsvorrichtung angeordnet.

Bei einigen Ausführungsformen ist die Flussmitteltrocknungseinrichtung dazu eingerichtet, das auf das wenigstens eine Zellkontaktsystem aufgebrachte Flussmittel zu trocknen oder auszuhärten.

Bei einigen Ausführungsformen weist die Flussmitteltrocknungseinrichtung wenigstens eine Flussmitteltrocknungs-Prüfeinrichtung auf, die dazu eingerichtet ist, Positionen, Auftragsfläche und/oder den Konturverlauf des auf die Bereiche aufgebrachten Flussmittels vor und/oder nach dem Trocknungsvorgang mittels einer oder mehrerer Prüfeinheiten zu prüfen. Bei einigen Ausführungsformen ist die Flussmitteltrocknungs-Prüfeinrichtung separat zu der Flussmittelaufbring-Prüfeinrichtung ausgeführt; mit anderen Worten sind jeweils getrennte Prüfeinrichtungen zum Prüfen des Flussmittelauftrags und zum Prüfen der Flussmitteltrocknung vorgesehen. Einige andere Ausführungsformen weisen wenigstens eine Prüfeinrichtung (oder auch mehrere Prüfeinrichtungen) auf, die sowohl zum Prüfen des Flussmittelauftrags als auch zum Prüfen der Flussmitteltrocknung eingerichtet ist. Mit anderen Worten können die Flussmittelaufbring-Prüfeinrichtung und die Flussmitteltrocknung-Prüfeinrichtung auch ein und dieselbe Prüfeinrichtung sein. Sowohl für die Flussmittelaufbring-Prüfeinrichtung als auch für die Flussmittetrocknung-Prüfeinrichtung ist es denkbar, dass diese eine Kl-Integration, insbesondere zur Prüfung der Positionen, Auftragsfläche und/oder Konturverlauf des aufgebrachten Flussmittels, aufweisen. Bei einigen Ausführungsformen weist die Flussmitteltrocknung-Prüfeinrichtung eine computerimplementierte Steuereinheit auf, die dazu eingerichtet ist, die Flussmitteltrocknung unter Einsatz von Maschinen-Learning zu prüfen.

Bei einigen Ausführungsformen weist die Flussmitteltrocknungseinrichtung eine Strahlungsquelle zum Aussenden von Strahlung zur Erzeugung von Wärmeenergie auf den zumindest einen vorbestimmten Bereich auf. Bei einigen Ausführungsformen ist die Strahlungsquelle zum selektiven Aussenden von Strahlung auf den zumindest einen vorbestimmten Bereich ausgebildet. Bei einigen anderen Ausführungsformen muss die Strahlungsquelle nicht selektiv strahlen, sondern kann ein breiter gestreutes Strahlungsfeld aussenden, wobei dann bevorzugt die Strahlung durch eine Maske oder Blende auf den (wenigstens einen) vorbestimmten Bereich begrenzt wird.

Bei einigen Ausführungsformen weist die Strahlungsquelle wenigstens eine Lichtquelle zum Ausstrahlen von Licht auf zumindest die vorbestimmten Bereiche auf.

Bei einigen Ausführungsformen weist die Strahlungsquelle wenigstens eine IR-Strahlungsquelle zum Ausstrahlen von IR-Strahlung auf zumindest die vorbestimmten Bereiche auf.

Bei einigen Ausführungsformen weist die Strahlungsquelle wenigstens eine Laserstrahlungsquelle zum selektiven Aussenden von Laserstrahlung auf die vorbestimmten Bereiche auf.

Bei einigen Ausführungsformen weist die Strahlungsquelle wenigstens eine Maske oder Blende zum Ausblenden von Strahlung auf nicht zu bearbeitende Bereiche der Zellkontaktsysteme auf. Eine solche Maske oder Blende kann anstelle an der Strahlenquelle aber auch am Zellkontaktsystem angeordnet werden.

Bei einigen Ausführungsformen weist die Flussmitteltrocknungseinrichtung wenigstens eine Heizeinrichtung auf, die dazu ausgebildet ist, den zumindest einen vorbestimmten Bereich zu kontaktieren, um ihn mittels Konduktion aufzuwärmen.

Darüber hinaus ist es auch denkbar, dass die Flussmitteltrocknungseinrichtung zumindest eine Konvektionsheizeinrichtung, wie bspw. einen Ofen, aufweist.

Konvektionsheizeinrichtungen, wie z.B. Öfen, sind schon lange bekannt und vergleichsweise kostengünstig. Mit Konvektionsheizeinrichtungen wird das gesamte Zellkontaktsystem auf eine bestimmte Temperatur erwärmt, wodurch der Energiebedarf erhöht und/oder ein Zeitintervall bis zur vollständigen Flussmitteltrocknung (und damit die Taktzeiten) verglichen mit anderen Flussmitteltrocknungseinrichtungen länger sein kann.

Bei einigen Ausführungsformen weist die Laserstrahlungsquelle eine Strahlformungseinheit auf, die dazu eingerichtet ist, den Laserstrahl aufzuteilen und/oder entsprechend der Anzahl, Form und/oder Verteilung der vorbestimmten Bereiche zu formen.

Bei einigen Ausführungsformen weist die Laserstrahlungsquelle eine Laseroptik und wenigstens ein diffraktives optisches Element (DOE) auf.

Bei einigen Ausführungsformen weist die Laserstrahlungsquelle eine Scanneroptik oder eine Festoptik auf.

Bei einigen Ausführungsformen weist die Laserstrahlungsquelle eine Laseroptik auf, die dazu eingerichtet ist, die Laserstrahlung auf den wenigstens einen vorbestimmten Bereich zu positionieren.

Bei einigen Ausführungsformen weist die Laserstrahlungsquelle ein Element auf, das dazu eingerichtet ist, Laserstrahlung derart zu brechen/abzulenken, dass die Laserstrahlung in eine vorbestimmte Anzahl an Teillaserstrahlen unterteilt wird und/oder eine vorbestimmte Fläche mit vorbestimmter Kontur auf der zu bestrahlenden Fläche bildet, die abhängig von der Fläche und der Kontur des jeweiligen vorbestimmten Bereichs mit Flussmittelauftrag ausgebildet ist.

Bei einigen Ausführungsformen ist die Laserstrahlungsquelle dazu ausgebildet, die mit Flussmittel versehene Fläche homogen mit Laserstrahlung zu beaufschlagen.

Bei einigen Ausführungsformen weist die Zellkontaktsystembearbeitungsvorrichtung mehrere Bearbeitungsstrecken auf, die übereinander - insbesondere als mehrere Ebenen - und/oder nebeneinander durch den Flussmittelaufbringbereich und den Flussmitteltrocknungsbereich verlaufen, um mehrere Zellkontaktsysteme parallel oder zumindest teilweise zeitlich überlappend mit der Flussmittelaufbringeinrichtung und der Flussmitteltrocknungseinrichtung zu bearbeiten. So ist es denkbar, dass die Flussmitteltrocknungseinheit neben wärmeeinbringenden Komponenten auch kühlende Komponenten, wie bspw. Kühltunnel aufweisen kann.

Bei einigen Ausführungsformen weist die Zellkontaktsystembearbeitungsvorrichtung eine Be- und/oder Entladeeinrichtung auf, die dazu eingerichtet ist, das zumindest eine Zellkontaktsystem zur Bearbeitung durch die Zellkontaktsystembearbeitungsvorrichtung aufzunehmen, und/oder das zumindest eine fertig bearbeitete Zellkontaktsystem zu entladen. Eine Be- und Entladung der Zellkontaktbearbeitungsvorrichtung kann zeitlich überlappend durchgeführt werden.

Bei einigen Ausführungsformen weist die Zellkontaktsystembearbeitungsvorrichtung eine Ausschleusungseinrichtung auf, die dazu eingerichtet ist, zumindest ein mängelbehaftetes Zellkontaktsystem, das bei einer Prüfung in dem Zellkontaktsystembearbeitungsvorrichtung aussortiert worden ist, aufzunehmen, um es einer Nachbearbeitung oder einer Entsorgung zuzuführen. Bei einigen Ausführungsformen ist eine Nachbearbeitungseinrichtung vorgesehen, die eine automatische und/oder manuelle Nachbearbeitung an dem mängelbehafteten Zellkontaktsystem durchführen kann. Bei einigen Ausführungsformen können nachbearbeitete Teile dann im Anschluss an die Nachbearbeitung über die Ausschleusungseinrichtung auch wieder in den Prozess eingeschleust werden. Es ist auch denkbar, kleinere Korrekturen von Mängeln, die insbesondere während oder nach dem Aufbringen des Flussmittels, durch Prüfen durch die Flussmittelaufbring-Prüfeinrichtung erfasst werden, inline zu korrigieren, also ohne ein mit solchen Mängeln behaftetes Zellkontaktsystem über die Ausschleusungseinrichtung aus dem eigentlichen Bearbeitungsprozess auszuschleusen, um den festgestellten Mangel zu beheben.

Bei einigen Ausführungsformen ist die Ausschleusungseinrichtung dazu eingerichtet, wahlweise auch zum Beladen der Zellkontaktsystembearbeitungsvorrichtung mit mindestens einem zu bearbeitenden Zellkontaktsystem und/oder zum Entladen des zumindest einen bearbeiteten Zellkontaktsystems eingesetzt zu werden.

Einige Ausführungsformen der Zellkontaktsystembearbeitungsvorrichtung weisen eine Kühleinrichtung auf, die dazu eingerichtet ist, das Zellkontaktiersystem beim Aufbringen und/oder Trocknen/Aushärten des Flussmittels zu kühlen. Bei einigen Ausführungsformen weist die Zellkontaktsystembearbeitungsvorrichtung eine Kühleinrichtung zum Kühlen des zumindest einen Zellkontaktsystems nach dem Trocknen oder Aushärten auf. Die Kühleinrichtung dient in diesem Fall insbesondere zum Abkühlen des Zellkontaktsystems nach dem gezielten Wärmeauftrag und dem dadurch erfolgten Trocknen/Aushärten. Die Kühleinrichtung weist beispielsweise einen Ventilator, eine in eine Strahlungsquelle integrierte, vorzugsweise separat ansteuerbare, Kühlung, einen in eine Strahlungsquelle integrierten (vorzugsweise separat ansteuerbaren) Ventilator, eine Kühlkammer, einen Kühlbereich mit einem kontinuierlichen Laufförderband und/oder eine angestellte Stapelbox mit Kühlung als aktive Kühleinheit(en) auf.

Die Erfindung schafft gemäß einem weiteren Aspekt eine Verwendung einer Zellkontaktsystembearbeitungsvorrichtung nach einer der voranstehenden Ausgestaltungen zum Aufbringen von Flussmittel auf thermische Sollbruchstellen des wenigstens einen Zellkontaktsystems. Bei der Verwendung kann demnach Flussmittel auf ein einzelnes Zellkontaktsystem aufgebracht werden oder es kann Flussmittel auf mehrere Zellkontaktsysteme aufgebracht werden. Insbesondere erfolgt die Verwendung im Rahmen einer Serienfertigung, um mit geringer Taktzeit Flussmittel auf Zellkontaktsysteme aufzubringen.

Bei einigen Ausführungsformen der Verwendung weist das zumindest eine Zellkontaktsystem wenigstens einen Anodenkontaktbereich zur Kontaktierung einer Anode einer Batteriezelle und einen Kathodenkontaktbereich zur Kontaktierung einer Kathode einer Batteriezelle und wenigstens einen Sollbruchstellenbereich mit einer Sollbruchstelle auf, wobei der Sollbruchstellenbereich den Anodenkontaktbereich oder einen von mehreren Anodenkontaktbereichen mit dem Kathodenkontaktbereich oder einem von mehreren Kathodenkontaktbereichen elektrisch und physisch verbindet.

Gemäß einem weiteren Aspekt schafft die Erfindung ein Zellkontaktsystembearbeitungsverfahren zum Bearbeiten von Zellkontaktsystemen, die zum elektrischen Verbinden von Batteriezellen zu einem Batteriecluster dienen, um Flussmittel auf vorbestimmte Bereiche der Zellkontaktsysteme aufzubringen und zu trocknen; umfassend

Bereitstellen einer Zellkontaktbearbeitungsvorrichtung nach einer der voranstehenden Ausgestaltungen und die folgenden Schritte:
S1 Zuführen wenigstens eines Zellkontaktsystems zu der Flussmittelaufbringeinrichtung;
S2 Aufbringen von Flussmittel in definierter Menge auf wenigstens einen vorbestimmten Bereich des wenigstens einen Zellkontaktsystems;
S3 Überführen des wenigstens einen Zellkontaktsystems, auf das das Flussmittel aufgebracht ist, zu der Flussmitteltrocknungseinrichtung;
S4 Trocknen/Aushärten des Flussmittels durch Erwärmen zumindest des wenigstens einen mit dem Flussmittel versehenen Bereiches des Zellkontaktsystems für ein vorbestimmtes Zeitintervall auf eine vorbestimmte Temperatur; und
S5 Entnehmen des das ausgehärtete Flussmittel aufweisenden wenigstens einen Zellkontaktsystems.

Einige Ausführungsformen des Zellkontaktsystembearbeitungsverfahren umfassen den Schritt:
S6 Kühlen des Zellkontaktsystems.

Bei einigen Ausführungsformen wird Schritt S6 während oder zeitlich überlappend mit Schritt S4 durchgeführt. Bei einigen Ausführungsformen wird Schritt S6 vor Schritt S5 durchgeführt.

Bei einigen Ausführungsformen des Zellkontaktsystembearbeitungsverfahrens ist vorgesehen, dass Schritt S1 und/oder Schritt S5 automatisiert durchgeführt werden.

Bei einigen Ausführungsformen des Zellkontaktsystembearbeitungsverfahrens ist vorgesehen, dass Schritt S1 positionsgenaues Zuführen des wenigstens einen Zellkontaktsystems umfasst.

Bei einigen Ausführungsformen des Zellkontaktsystembearbeitungsverfahrens ist vorgesehen, dass wenigstens einer oder mehrere der Schritte S1 bis S4 einen Prüfschritt zum Prüfen von Position, Fläche, Ausrichtung, Kontur und/oder Verlauf des Zellkontaktsystems, des vorbestimmten Bereichs und/oder des Flussmittels aufweist.

Bei einigen Ausführungsformen des Zellkontaktsystembearbeitungsverfahrens ist vorgesehen, dass Schritt S4 selektives Aufbringen von Strahlung zur Wärmeerzeugung lediglich auf den vorbestimmten Bereich umfasst.

Die Erfindung schafft gemäß einem weiteren Aspekt eine computerimplementierte Steuerung für eine Zellkontaktsystembearbeitungsvorrichtung nach einer der voranstehenden Ausgestaltungen, wobei die Steuerung dazu eingerichtet ist, die Zellkontaktsystembearbeitungsvorrichtung zum Durchführen des Zellkontaktsystembearbeitungsverfahrens nach einer dessen voranstehend erläuterten Ausgestaltungen anzusteuern.

Die Steuerung weist insbesondere einen Prozessor und einen Speicher auf, in den ein Computerprogramm geladen ist, welches Anweisungen umfasst, die eine Zellkontaktsystembearbeitungsvorrichtung nach einer der voranstehenden Ausgestaltungen veranlassen, das Zellkontaktsystembearbeitungsverfahren nach einer dessen voranstehend erläuterten Ausgestaltungen auszuführen. Bei einigen Ausführungsformen weist die Steuerung die oben bereits erwähnte(n) eine oder mehrere Steuereinheit(en) für die Prüfeinrichtung(en) auf.

Ein weiterer Aspekt betrifft demnach ein Computerprogramm mit Anweisungen, die eine Zellkontaktsystembearbeitungsvorrichtung nach einer der voranstehenden Ausgestaltungen veranlassen, das Zellkontaktsystembearbeitungsverfahren nach einer dessen voranstehend erläuterten Ausgestaltungen auszuführen.

Ausführungsformen der Erfindung betreffen Vorrichtungen und Verfahren zur Verarbeitung von Zellkontaktiersystemen. Einige Ausführungsformen der zu verarbeitenden Zellkontaktiersysteme werden dazu eingesetzt, eine Mehrzahl von Batteriezellen elektrisch zu einem Batteriecluster, wie bspw. einem Batteriemodul oder einem Batteriepack zu verbinden. Einige Ausführungsformen der zu verarbeitenden Zellkontaktiersysteme weisen mehrere Materialien, wie ein Metall oder eine Metalllegierung, insbesondere Aluminium, sowie Kunststoffe auf.

Bei einigen Ausführungsformen sollen im Zellkontaktiersystem sogenannte thermische Sollbruchstellen vorgesehen werden, d.h., Bereiche, die derart definiert sind, dass sie im Falle einer (starken) Überhitzung und/oder eines Brennens einer Batteriezelle durchschmelzen und somit die Ausbreitung auf das restliche Batteriecluster verhindern. Bei einigen Ausführungsformen der Erfindung soll mit der Verarbeitung erreicht werden, dass solche Sollbruchstellen mit einem sogenannten Flussmittel versehen werden, das ein Aufschmelzen des Materials im Bereich der Sollbruchstelle im Falle einer defekten Batteriezelle fördert, da das Flussmittel die Schmelztemperatur des Materials der Sollbruchstellen herabsetzt und ein Bilden von Oxidationsschichten im Bereich der Sollbruchstelle unterbindet.

Bei einigen Ausführungsformen wird Flussmittel auf zu lötende Bereiche aufgebracht, die Bereiche werden verlötet und das Flussmittel wird nach dem Lötvorgang ausgehärtet/getrocknet.

Einige Ausführungsformen stellen ein System sowie ein Verfahren zum Aufbringen und Trocknen/Aushärten von Flussmittel auf Werkstücke/Bauteile, insbesondere Zellkontaktiersysteme (ZKS), die zum elektrischen Verbinden von mehreren Batteriezellen zu sogenannten Batterieclustern verwendet werden, bereit, wobei das System und/oder das Verfahren insbesondere eine Serienfertigung und dafür erforderliche Taktzeiten ermöglicht.

Gemäß einigen Ausführungsformen wird ein Bearbeitungssystem für Zellkontaktiersysteme (ZKS-Bearbeitungssystem) bereitgestellt, das zumindest einen Bereich zum Auftragen bzw. Aufbringen von Flussmittel (Flussmittelauftragsbereich) auf vorbestimmte Bereiche eines Zellkontaktiersystems (kurz: Zellkontaktsystem oder ZKS) und einen Bereich zum Trocken bzw. Aushärten des auf die vorgesehenen Bereiche des Zellkontaktiersystems aufgetragenen Flussmittels (Flussmitteltrocknungsbereich) aufweist.

Ausführungsbeispiele der Erfindung werden im Folgenden anhand der beigefügten Zeichnungen näher erläutert. Darin zeigt:
- Fig. 1: eine schematische Blockdarstellung einer ersten Ausführungsform einer Zellkontaktsystembearbeitungsvorrichtung;
- Fig. 2: eine schematische Blockdarstellung einer zweiten Ausführungsform einer Zellkontaktsystembearbeitungsvorrichtung;
- Fig. 3: eine vereinfachte schematische Seitenansicht eines Ausführungsbeispiels der Zellkontaktsystembearbeitungsvorrichtung gemäß der zweiten Ausführungsform;
- Fig. 4: eine schematische Draufsicht eines Ausführungsbeispiels einer Zellkontaktiereinheit;
- Fig. 5: eine schematische Draufsicht eines Ausführungsbeispiels eines Zellkontaktiersystems, welches mehrere der Zellkontaktiereinheiten aufweist;
- Fig. 6: eine schematische Draufsicht eines weiteren Ausführungsbeispiels des Zellkontaktiersystems;
- Fig. 7: ein Flussdiagramm mit Schritten eines Zellkontaktsystembearbeitungsverfahrens gemäß beispielhaften Ausführungsformen;
- Fig. 8: eine schematische Seitenansicht eines ersten Ausführungsbeispiels einer als Lasersystem ausgebildeten Strahlungsquelle als Teil einer Flussmitteltrocknungseinrichtung einer Ausführungsform der Zellkontaktsystembearbeitungsvorrichtung;
- Fig. 9: eine schematische Seitenansicht eines zweiten Ausführungsbeispiels der als Lasersystem ausgebildeten Strahlungsquelle;
- Fig. 10: eine schematische Seitenansicht eines dritten Ausführungsbeispiels der als Lasersystem ausgebildeten Strahlungsquelle;
- Fig. 11: eine schematische Seitenansicht einer Heizeinrichtung als Teil einer Flussmitteltrocknungseinrichtung einer weiteren Ausführungsform der Zellkontaktsystembearbeitungsvorrichtung bei der Erwärmung eines Sollbruchstellenbereichs eines Zellkontaktiersystems;
- Fig. 12: eine schematische Blockdarstellung einer dritten Ausführungsform einer Zellkontaktsystembearbeitungsvorrichtung; und
- Fig. 13: eine vereinfachte schematische Seitenansicht eines Ausführungsbeispiels der Zellkontaktsystembearbeitungsvorrichtung gemäß der dritten Ausführungsform.

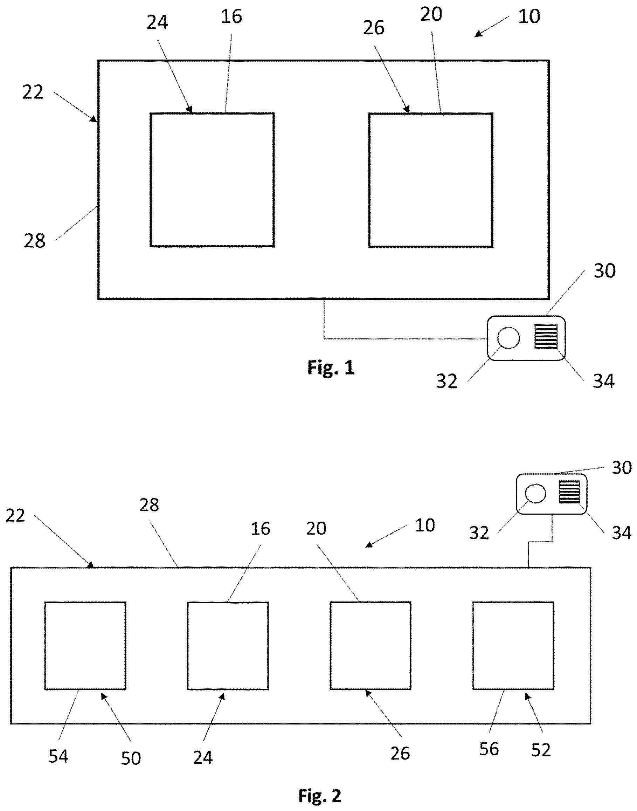

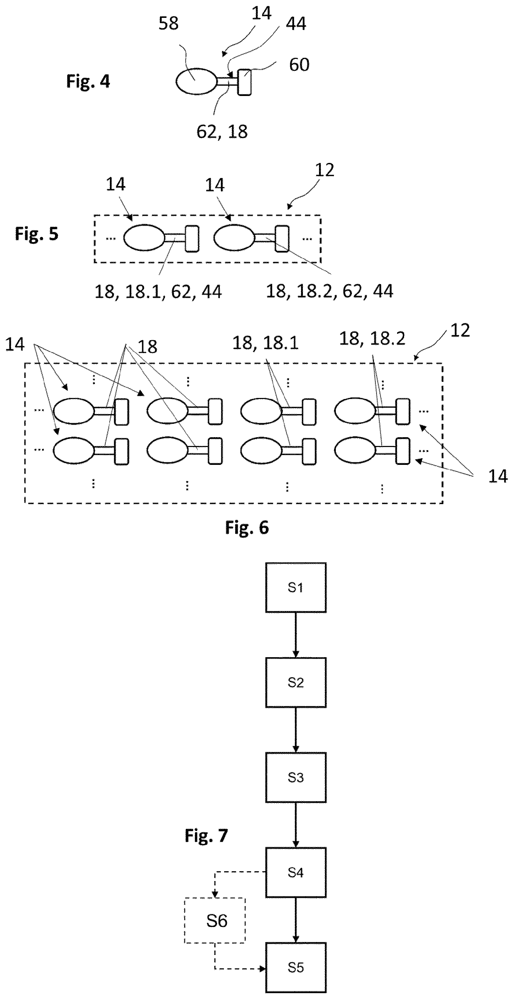

In den Fig. 1 bis 3 sowie 12 und 13 sind schematisch Ausführungsformen einer Zellkontaktsystembearbeitungsvorrichtung 10 zum Bearbeiten von Zellkontaktsystemen 12 gezeigt. Beispiele für Zellkontaktsysteme 12 sind in Fig. 5 und 6 gezeigt, eine Zellkontakteinheit 14 davon ist in Fig. 4 dargestellt. Die Zellkontaktsysteme 12 dienen zum elektrischen Verbinden von Batteriezellen (nicht dargestellt) zu einem Batteriecluster, wie bspw. ein Batteriemodul oder ein Batteriepack. Der Begriff Batteriecluster wird hierin als Sammelbegriff für Batteriezellverbünde verwendet, unabhängig von der Anzahl und/oder der Art der Batterien, die über ein Zellkontaktsystem verbunden sind bzw. werden.

Gemäß Fig. 1 bis 3, 12 und 13 weist die Zellkontaktsystembearbeitungsvorrichtung 10 eine Flussmittelaufbringeinrichtung 16, die zum selektiven Auftragen von Flussmittel auf zumindest einen vorbestimmten Bereich 18 von zumindest einem Zellkontaktsystem 12 ausgebildet ist, und eine Flussmitteltrocknungseinrichtung 20 auf, die zum Trocknen und/oder Aushärten des durch die Flussmittelaufbringeinrichtung 16 aufgetragenen Flussmittels durch gezieltes Aufbringen von Wärmeenergie auf den zumindest einen vorbestimmten Bereich 18 ausgebildet ist.

Die Zellkontaktsystembearbeitungsvorrichtung 10 ist gemäß den dargestellten Ausführungsformen - siehe insbesondere Fig. 1 und 2 sowie 12 - als geschlossenes Zellkontaktsystembearbeitungssystem - im Folgenden ZKS-Bearbeitungssystem 22 genannt - mit einem Flussmittelauftragbereich 24 und einem Flussmitteltrocknungsbereich 26 ausgebildet, die in einem Gesamtgehäuse 28 untergebracht sind.

Die dargestellten Ausführungen der Zellkontaktsystembearbeitungsvorrichtung 10 weisen außerdem eine computerimplementierte Steuerung 30 mit Prozessor 32 und Speicher 34 auf, in dem ein Computerprogramm geladen ist, welches Anweisungen zum Ansteuern der einzelnen Komponenten der Zellkontaktsystembearbeitungsvorrichtung 10 enthält, die die Zellkontaktsystembearbeitungsvorrichtung 10 veranlassen, die im Folgenden näher erläuterten Funktionen und/oder Verfahren durchzuführen.

Der Flussmittelauftragsbereich 24 weist die Flussmittelaufbringeinrichtung 16 auf und ist dazu eingerichtet, das Flussmittel auf die vorbestimmten Bereiche 16 des Zellkontaktiersystems 12, insbesondere automatisiert aufzubringen.

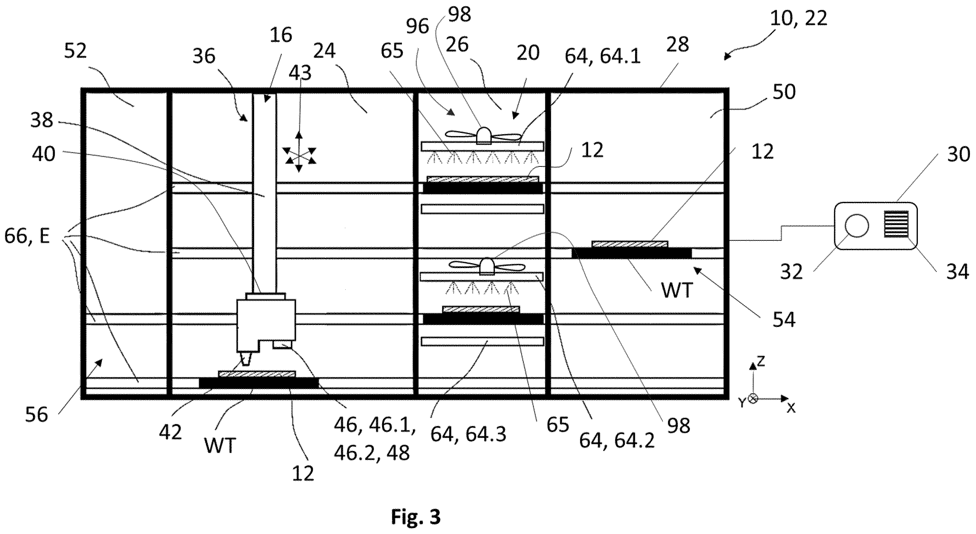

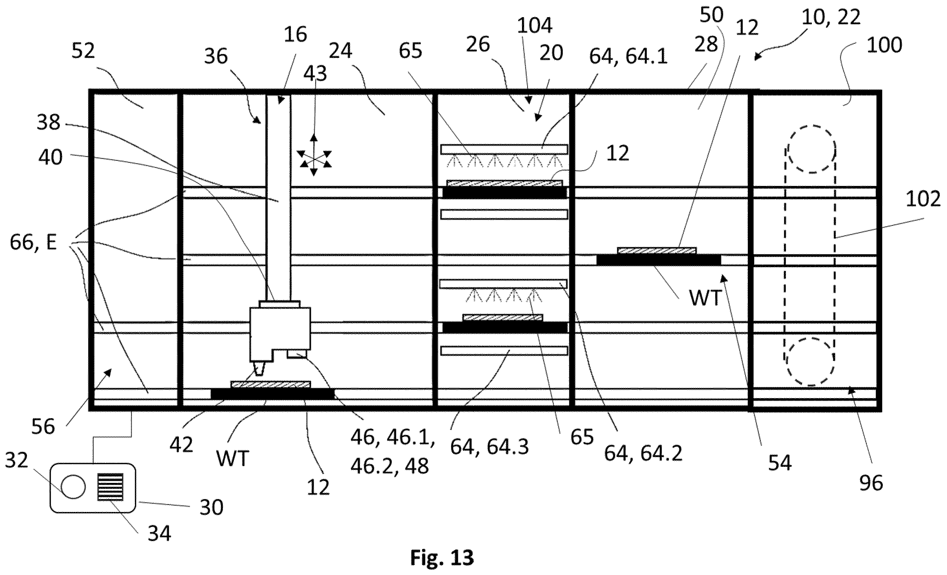

Wie in Fig. 3 und 13 gezeigt weist dafür der Flussmittelauftragsbereich 22 bzw. die Flussmittelaufbringeinrichtung 16 eine Applikationseinheit 36 auf. Die Applikationseinheit 36 weist beispielsweise ein Greifsystem 38 - z.B. mit einem oder mehreren Greifern 40 - oder ein Haltesystem sowie eine oder mindestens zwei Dosiereinrichtungen 42 (auch Dispenser genannt), insbesondere mehr als zwei Dosiereinrichtungen 42, auf. Die Komponenten 38, 40, 42 der Applikationseinheit 36 sind dazu eingerichtet, das Flussmittel in definierter Menge auf die vorbestimmten Bereiche 18 des Zellkontaktsystems 12 aufzubringen.

Die Applikationseinheit 36, der Flussmittelauftragsbereich 24 und/oder die Flussmittelaufbringeinrichtung 16 sind bei der in Fig. 3 und 13 gezeigten Ausführungsform derart ausgelegt, dass das Halte- oder Greifsystem 38, beispielsweise der wenigstens eine Greifer 40, jedes Zellkontaktsystem 12 auf jeder Ebene E erreichen kann, um das Flussmittel auf die vorbestimmten Bereiche 18 aufzubringen.

Der wenigstens eine Greifer 40 ist insbesondere in alle drei Raumrichtungen (x-, y- und z-Achse; siehe Fig. 3) mittels einer schematisch durch Pfeile 43 dargestellten Verfahreinheit verstellbar/verfahrbar. Dabei kann der wenigstens eine Greifer 40 zusätzlich auch zu den Raumrichtungen verkippt werden. Mit anderen Worten kann man sagen, dass die Verfahreinheit des wenigstens einen Greifers 40 eine Winkelverkippung aufweisen kann. Darüber hinaus kann auch jede einzelne Dosiereinrichtung 42 nochmals für sich, insbesondere in alle drei Raumrichtungen (x-, y- und z-Achse), verstellbar sein, um eine möglichst hohe Flexibilität für die Positionierung der Dosiereinrichtungen 42 zu ermöglichen. Zusätzlich oder alternativ können die Dosiereinrichtungen 42 parallel, synchron und/oder asynchron gesteuert werden. Dies kann nacheinander (eine Dosiereinrichtung 42 nach der anderen) oder, insbesondere komplett, voneinander entkoppelt, elektronisch oder manuell gesteuert werden. Insbesondere ist eine solche Verstellung der Dosiereinrichtungen 42 und/oder des Greifers 40 auch während des Aufbringens von Flussmittel auf vorbestimmte Bereiche 18 denkbar. Mit anderen Worten kann eine "on-the-fly"-Verstellung von Greifer 40 und/oder Dosiereinrichtung(en) 42 möglich sein. Insbesondere kann eine Verfahrgeschwindigkeit der Applikationseinheit bis zu 3000 mm/s, insbesondere zwischen etwa 300 mm/s und etwa 950 mm/s, weiter insbesondere etwa 450 mm/s bis etwa 750 mm/s betragen.

Gemäß Fig. 4 bis 6 sind die vorbestimmten Bereiche 18 insbesondere als Sollbruchstellen 44 ausgebildet, die im Fall eines Defekts einer Batteriezelle in einem Batteriecluster, das eine Mehrzahl von Batteriezellen, die über das Zellkontaktsystem 12 elektrisch miteinander verbunden sind, umfasst, ein Ausbreiten dieses Defekts auf weitere Batteriezellen des Batterieclusters zu unterbinden und vom Gesamtsystem zu entkoppeln. Ein solcher Defekt kann insbesondere ein Überhitzen oder gar ein Brennen einer Batteriezelle sein.

Gemäß Fig. 3 und 13, auf die nun wiederum Bezug genommen wird, weist die Zellkontaktsystembearbeitungsvorrichtung 10 bei einigen Ausführungsformen wenigstens ein Prüfsystem 46, bspw. ein kamera- und/oder sensorbasiertes Prüfsystem, auf. Bei einigen Ausführungsformen weist das Prüfsystem 46 eine Flussmittelaufbring-Prüfeinrichtung 48 zum Prüfen des Flussmittelauftrags auf oder ist als solche ausgebildet. Bei einigen (nicht dargestellten) Ausführungsformen weist das Prüfsystem 46 eine Flussmitteltrocknungs-Prüfeinrichtung zum Prüfen der Flussmitteltrocknung auf oder ist als solche ausgebildet.

Bei einigen Ausführungsformen weist die Flussmittelaufbringeinrichtung 16 und insbesondere die Applikationseinheit 36 die Flussmittelaufbring-Prüfeinrichtung 48, bspw. in Form eines kamera- und/oder sensorbasiertes Prüfsystems 46, auf.

Die Flussmittelaufbring-Prüfeinrichtung 48 ist dazu eingerichtet, die Positionen der Bereiche 18, auf die das Flussmittel aufgebracht werden soll, zu bestimmen und/oder um die Position, Auftragsfläche und/oder Konturverlauf des aufgebrachten (aber noch nicht getrockneten) Flussmittels zu bestimmen bzw. zu prüfen.

Das Prüfsystem 46 kann insbesondere dazu eingerichtet sein, eine sogenannte "on-the-fly"-Prüfung zu ermöglichen. Hierzu ist die Flussmittelaufbring-Prüfeinrichtung 48 bei einigen Ausführungsformen dazu eingerichtet, die Positionsbestimmung der vorbestimmten Bereiche 18 und/oder die Überprüfung des aufgebrachten Flussmittels durchzuführen, während sich die Applikationseinheit 36 relativ zu dem zu bearbeitenden Zellkontaktsystem 12 bewegt.

Das bedeutet, dass die Positionsbestimmung (und/oder Konturbestimmung des aufgetragenen Flussmittels) durch die Kamera- und/oder Sensorsysteme nicht stationär stattfinden muss, sondern während der Bewegung des jeweiligen Kamera- und/oder Sensorsystems stattfinden kann. Dadurch ist es zum Beispiel möglich, dass die Positionen der nächsten vorbestimmten Bereiche 18.2, auf die das Flussmittel aufgetragen werden soll, bestimmt werden, während die Applikationseinheit 36 gerade Flussmittel auf (von den nächsten Bereichen 18.2 verschiedene, siehe Fig. 6) Bereiche 18.1 aufbringt und/oder sich gerade in der Bewegung von den vorigen Bereichen 18.1 zu den nächsten Bereichen 18.2 befindet.

Ferner können die von dem Prüfsystem 46 erfassten Daten zur Ermittlung eines Höhenprofils des Zellkontaktsystems 12 genutzt werden. Dadurch ist es möglich, Abweichungen in der Formgebung des Zellkontaktsystems 12, z.B. aufgrund von Toleranzen, Verbiegen des Materials, etc., beim Aufbringen des Flussmittels zu berücksichtigen. Die Integration von KI zur Ermittlung von Konturen etc. kann zusätzlich ermöglichen, Neuformen und/oder - konturen mittels KI zu bilden.

Das Prüfsystem 46, insbesondere die Flussmittelaufbring-Prüfeinrichtung 48, kann separat von der Applikationseinheit 36 ausgeführt sein und an dieser befestigt werden. Alternativ ist es auch denkbar, das Prüfsystem 46, Flussmittelaufbring-Prüfeinrichtung 48, in die Applikationseinheit 36 zu integrieren.

Die in Fig. 3 und 13 gezeigte Positionierung des Prüfsystems 46 und/oder der Flussmittelaufbring-Prüfeinrichtung 48 ist als beispielhaft anzusehen. Das Prüfsystem 46 ist entsprechend so zu positionieren, dass es die von ihm durchzuführenden Prüfungen durchführen kann.

Zum Beispiel kann die Flussmittelaufbring-Prüfeinrichtung 48 in einer Bewegungsrichtung des Greifers 40 vor den Dosiereinrichtungen 42 angeordnet sein, um die Positionen der nächsten Bereiche 18.2, in denen das Flussmittel aufgebracht werden sollen, zu bestimmen, während die Dosiereinrichtungen 42 gerade dabei sind, Flussmittel auf (vorgelagerte) Bereiche 18.1 aufzubringen.

Zusätzlich oder alternativ ist es auch denkbar, ein Prüfsystem 46, insbesondere eine Flussmittelaufbring-Prüfeinrichtung 48, in der Bewegungsrichtung des Greifers 40 nach den Dosiereinheiten 42 an der Applikationseinheit 36 anzuordnen, um die Position, Auftragsfläche und/oder Konturverlauf des aufgetragenen Flussmittels zu prüfen, während das Flussmittel bereits auf die nächsten Bereiche 18.2 aufgebracht wird. Auch ist es denkbar, beide Prüfungen mit nur einem Prüfsystem 46 oder nur einer Flussmittelaufbring-Prüfeinrichtung 48 durchzuführen.

Im Folgenden wird wiederum auf die Fig. 1 bis 3 sowie 12 und 13 Bezug genommen. Der Flussmitteltrocknungsbereich 26 und die Flussmitteltrocknungseinrichtung 20 sind dazu eingerichtet, das auf das Zellkontaktsystem 12 aufgebrachte Flussmittel zu trocknen bzw. auszuhärten. Das bedeutet, dem Flussmittel wird im Wesentlichen die gesamte Feuchtigkeit, insbesondere Wasser entzogen, um die Bereiche 18, 18.1, 18.2, in denen das Flussmittel aufgetragen wurde, vor Korrosion zu schützen. Mit anderen Worten kann man sagen, dass die Flussmitteltrocknungseinrichtung 20 gewährleistet, dass das Flussmittel vollständig trocknet (= Trocknungsgarantie).

Auch in diesem Flussmitteltrocknungsbereich 26 ist es denkbar, die Positionen, die Auftragsfläche und/oder den Konturverlauf des auf die Bereiche aufgebrachten Flussmittels vor und/oder nach dem Trocknungsvorgang mittels eines oder mehrerer Prüfsysteme 46 - insbesondere mit einer oder in Form einer Flussmitteltrocknungsprüfeinrichtung (nicht dargestellt) - zu prüfen. Es ist auch denkbar, das an der Applikationseinheit 36 vorgesehene Prüfsystem 46 hierzu zu verwenden, indem die Applikationseinheit 36 auch in den Flussmitteltrocknungsbereich 26 verfahrbar ist.

Als Flussmittel können Lötflussmittel, insbesondere wasserbasierte Lötflussmittel, wie beispielsweise NOCOLOK^{®} Paint-F-Flux Cs TM M FG 42 UV R, oder Flussmitteldispersionen verwendet werden. Alternativ ist auch die Verwendung von lösungsmittelbasierten Lötflussmitteln denkbar.

Das Aushärten bzw. Trocknen des Flussmittels kann auf verschiedenen Arten durchgeführt werden, die später noch näher beschrieben werden.

Einige Ausführungsformen der Zellkontaktsystembearbeitungsvorrichtung 10 weisen mehrere Bearbeitungsstrecken 66 auf, die übereinander und/oder nebeneinander durch den Flussmittelauftragbereich 24 und den Flussmitteltrocknungsbereich 26 verlaufen, um mehrere Zellkontaktsysteme 12 parallel oder zumindest teilweise zeitlich überlappend mit der Flussmittelaufbringeinrichtung und der Flussmitteltrocknungseinrichtung zu bearbeiten. Beispielsweise sind, um den sogenannten "Output" des ZKS-Bearbeitungssystems 22 weiter zu verbessern bzw. zu erhöhen, bei einigen Ausführungsformen mehrere Bearbeitungsebenen - Ebenen E - vorgesehen (siehe Fig. 3 und 13), sodass mehrere Zellkontaktsysteme 12 zeitlich (zumindest teilweise) überlappend durch das ZKS-Bearbeitungssystem 22 bearbeitet werden können.

Pro Ebene E kann zumindest ein Zellkontaktsystem 12 eingebracht werden. Bei einigen Ausführungsformen ist vorgesehen, dass pro Ebene E zwei oder mehr Zellkontaktsysteme 12 zumindest teilweise zeitlich überlappend vorhanden sind.

Das bedeutet, es können mehrere Zellkontaktsysteme 12 in dem ZKS-Bearbeitungssystem 22 vorhanden sein und zumindest teilweise zeitlich überlappend bearbeitet werden. So ist es möglich, dass sich mehrere Zellkontaktsysteme 22 zum Aushärten/Trocknen des Flussmittels in dem Trocknung-Stationsbereich - Flussmitteltrocknungsbereich 26 - befinden, während der Flussmittelauftrag-Stationsbereich - Flussmittelauftragbereich 24 - bereits mit den nächsten Zellkontaktsystemen 12 befüllt wird und - je nach Trocknungsdauer - das Flussmittel auf die nächsten Zellkontaktsysteme 12 aufgebracht wird.

Wie in Fig. 2 und 3 beispielhaft gezeigt, weist bei einigen Ausführungsformen das ZKS-Bearbeitungssystem 22 ferner einen Be- und/oder Entladebereich 50 und/oder einen Ausschleusbereich 52 auf.

Der Be- und/oder Entladebereich 50 weist eine Be- und/oder Entladeeinrichtung 54 auf, die dazu eingerichtet ist, die Zellkontaktsysteme 12 zur weiteren Bearbeitung durch das ZKS-Bearbeitungssystem 22 in das ZKS-Bearbeitungssystem 22 einzubringen, insbesondere indem die Zellkontaktsysteme 12 auf Werkstückträger (WT) angeordnet werden, und/oder die durch das ZKS-Bearbeitungssystem 22 bearbeiteten Zellkontaktsysteme 12, also die das ausgehärtete Flussmittel aufweisenden Zellkontaktsysteme 12, zur weiteren Bearbeitung aus dem ZKS-Bearbeitungssystem 22 zu entladen/zu entnehmen. Es ist auch eine Beladung des ZKS-Bearbeitungssystems mit Zellkontaktsystemen 12 ohne Werkstückträger denkbar. Bei den dargestellten Ausführungsformen ist ein Be- und Entladebereich 50 dargestellt, in dem das Beladen und das Entladen stattfinden kann. Bei weiteren nicht dargestellten Ausführungsformen sind getrennte Bereiche für Beladen und Entladen vorgesehen.

Der Ausschleusbereich 52 weist eine Ausschleusungseinrichtung 56 auf, die dazu eingerichtet ist, Zellkontaktsystem 12, die aufgrund einer Prüfung und/oder anderer Probleme, wie bspw. eine Störung, während der Bearbeitung durch das ZKS-Bearbeitungssystem 22 aufgrund festgestellter Mängel aussortiert werden, aufzunehmen. Von hier können die aussortierten Zellkontaktiersysteme 12 entweder zur Nachbearbeitung (insbesondere automatisiert) entnommen werden - und gegebenenfalls im Anschluss an die Nachbearbeitung über die Ausschleusungseinrichtung 56 wieder in den Prozess eingeschleust werden - oder als Ausschuss gänzlich aussortiert werden. Die Nachbearbeitung kann auch durch einen einzelnen Dispenser und/oder Kameraprüfung automatisch oder manuell erfolgen.

Zusätzlich ist es denkbar, den Ausschleusbereich 52 und/oder die Ausschleusungseinrichtung 56 zum Beladen des ZKS-Bearbeitungssystems 22 zu nutzen, im Falle einer Störung im Beladebereich, bspw. eines Ausfalls/Defekts/Fehlers eines dort zur automatisierten Beladung eingesetzten Beladeroboters. Insbesondere ist es denkbar, dass nach jedem Bearbeitungsschritt jedes Zellkontaktsystem 12 geprüft wird, und im Falle eines nicht tolerierbaren Mangels aus dem ZKS-Bearbeitungssystem 22 zur Nachbearbeitung oder als Ausschuss (sogenannte niO - nicht in Ordnung) ausgeschleust werden. Kleinere Mängel, wie bspw. eine unzureichende Menge aufgetragenes Flussmittel, können auch in-line, z.B., in der Dispenserzelle, korrigiert werden, und müssen somit nicht aus dem Prozess ausgeschleust werden.

So kann der Automatisierungsgrad des ZKS-Bearbeitungssystems 22 weiter erhöht werden.

Gemäß Fig. 4 bis 6, auf die nun Bezug genommen wird, weist ein Zellkontaktsystem 12 (auch Zellkontaktiersystem genannt) zumindest zwei Zellkontakteinheiten 14 (auch Zellkontaktiereinheiten genannt) auf, die jeweils einen Anodenkontaktbereich 58 zur Kontaktierung der Anode einer Batteriezelle (die Batteriezellen sind nicht dargestellt) und einen Kathodenkontaktbereich 60 zu Kontaktierung der Kathode einer weiteren Batteriezelle und einen als Sollbruchstelle 44 wirkenden Sollbruchstellenbereich 62 auf, der den Anodenkontaktbereich 58 und den Kathodenkontaktbereich 60 physisch und elektrisch verbindet (siehe Fig. 4). Insbesondere weist ein Zellkontaktsystem 12 mehr als zwei Zellkontakteinheiten 14 auf, die als Strang und/oder Fläche angeordnet sein können. Der für das Zellkontaktsystem 12 gewählten Verschaltung der Zellkontakteinheiten 14 sind lediglich durch die physikalischen Gesetze und/oder elektrotechnischen Vorgaben Grenzen gesetzt. Eine Parallelschaltung des Zellkontaktsystems 12 dient dazu, die Kapazität des Batterieclusters zu erhöhen. Eine Reihenschaltung des Zellkontaktsystems 12 dient dazu, die Spannung des Batterieclusters zu erhöhen.

Im Folgenden wird mit Bezugnahme auf Fig. 7 ein Zellkontaktsystembearbeitungsverfahren zum Bearbeiten von Zellkontaktsystemen 12 beschrieben, die zum elektrischen Verbinden von Batteriezellen zu einem Batteriecluster dienen, um Flussmittel auf vorbestimmte Bereiche 18, 18.1, 18.2 der Zellkontaktsysteme 12 aufzubringen und zu trocknen. Hierzu wird insbesondere die Zellkontaktsystembearbeitungsvorrichtung 10, insbesondere in Form des ZKS-Bearbeitungssystems 22 verwendet.

Das in Fig. 7 schematisch dargestellte Verfahren ist ein Verfahren zur Bearbeitung eines Zellkontaktsystems 12, insbesondere zum Aufbringen und Trocknen von Flussmittel auf vorbestimmten Bereichen 18 des Zellkontaktsystems 12 und umfasst bei einigen Ausführungsformen zumindest die folgenden Schritte:
S1: Einbringen, insbesondere positionsgenau und/oder automatisiert, von zumindest einem Zellkontaktsystem 12 in den Flussmittelauftragsbereich 24 des ZKS-Bearbeitungssystems 22;
S2: Aufbringen, vorzugsweise mittels der Applikationseinheit 36, eines Flussmittels in definierter Menge, insbesondere etwa 10 mg bis etwa 200 mg, weiter insbesondere etwa 15 mg bis etwa 150 mg, auf vorbestimmte Bereiche 18 (= Sollbruchstellenbereiche 62) des Zellkontaktsystems 12;
S3: Einbringen des Zellkontaktsystems 12, auf das das Flussmittel aufgebracht ist, in den Flussmitteltrocknungsbereich 26 des ZKS-Bearbeitungssystems 22;
S4: Trocknen/Aushärten des Flussmittels durch Erwärmen von zumindest den mit dem Flussmittel versehenen Bereichen 18, 62 des Zellkontaktsystems 12 für ein vorbestimmtes Zeitintervall auf eine vorbestimmte Temperatur; und
S5: Entnehmen, insbesondere automatisiert, des das ausgehärtete Flussmittel aufweisenden Zellkontaktsystems 12.

Bei einigen Ausführungsformen, die in Fig. 7 durch gestrichelte Linien dargestellt sind, wird zwischen den Schritten S4 und S5 noch folgender Schritt durchgeführt:
S6: Kühlen des Zellkontaktsystems auf eine Zieltemperatur.

Bei einigen Ausführungsformen des Verfahrens weist Schritt S2 wenigstens einen oder mehrere Prüfschritte auf.

Beispielsweise werden bei einigen Ausführungsformen in dem Schritt S2 die Positionen der vorbestimmten Bereiche 18 vorab mittels eines ersten Prüfsystem 46, 46.1 bestimmt. Das Prüfsystem 46, 46.1 kann in die Applikationseinheit 36 integriert sein, siehe Fig. 3 und 13.

Bei einigen Ausführungsformen wird in Schritt S2 das Flussmittel nacheinander auf jeweils einen Bereich 18.1, 18.2 aufgebracht (serielle Applikation) oder es wird auf mehrere Bereiche 18.1, 18.2 gleichzeitig aufgebracht (zumindest teilweise parallele Applikation).

Bei einigen Ausführungsformen werden in Schritt S2 nach dem Aufbringen des Flussmittels die Position Fläche und/oder Kontur des aufgebrachten Flussmittels, beispielsweise mit einem zweiten Prüfsystem 46, 46.2 geprüft (Schritt S2.2). Dabei können das erste Prüfsystem 46.1, 46.2 und das zweite Prüfsystem dasselbe Prüfsystem 46 oder voneinander separate Prüfsysteme sein.

Bei einigen Ausführungsformen wird in Schritt S3 das mit dem Flussmittel versehene Zellkontaktsystem 12 für ein vorbestimmtes Zeitintervall auf eine vorbestimmte Temperatur erwärmt (Schritt S3.1), um das Flussmittel auf dem Zellkontaktsystem 12 auszuhärten bzw. zu trocknen.

Diese Wärme kann entweder auf räumlich begrenzte Bereiche des Zellkontaktsystems 12, insbesondere auf die mit Flussmittel versehenen Bereiche 18, oder auf das gesamte Zellkontaktsystem 12 wirken.

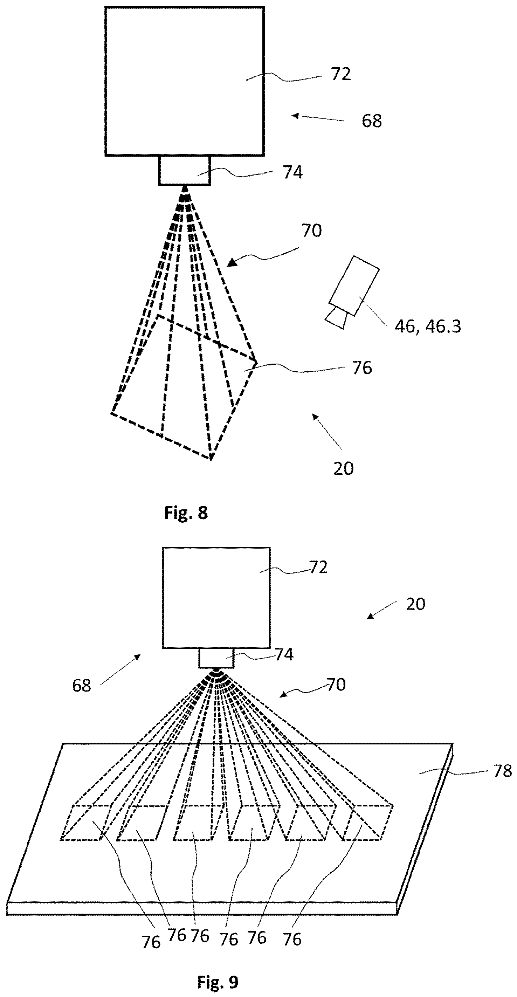

Bei einigen Ausführungsformen wird im Anschluss die Position, Fläche und/oder Kontur des ausgehärteten/getrockneten Flussmittels (gegebenenfalls nochmals), beispielsweise mit einem dritten Prüfsystem 46.3, geprüft (Schritt S3.2). Das dritte Prüfsystem 46.3 ist insbesondere als ein von dem ersten und/oder zweiten Prüfsystem 46, 46.1, 46.2 separates Prüfsystem vorgesehen, wie beispielhaft schematisch in Fig. 8 gezeigt.

Das vorbestimmte Zeitintervall zur Trocknung des Flussmittels in Schritt S4 ist abhängig von der Menge des auf je einen Bereich 18 aufgetragenen Flussmittels und/oder der für die Trocknung vorbestimmten Temperatur, und beträgt insbesondere etwa 1 Minute bis etwa 20 Minuten, insbesondere etwa 2 Minuten bis etwa 10 Minuten.

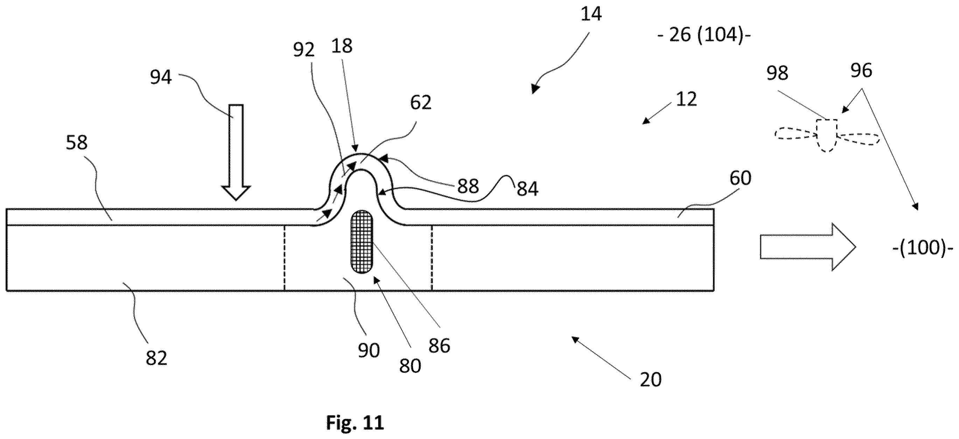

Zum Trocknen/Aushärten des Flussmittels durch Erwärmen von zumindest den mit dem Flussmittel versehenen Bereichen 18 des Zellkontaktsystems 12 für ein vorbestimmtes Zeitintervall auf eine vorbestimmte Temperatur (Schritt S4) sind bei unterschiedlichen Ausgestaltungen der Zellkontaktsystembearbeitungsvorrichtung 10 und/oder des Zellkontaktsystembearbeitungsverfahrens folgende Varianten/Ausführungsformen vorgesehen:
- Erwärmen mittels Infrarotstrahlung (IR-Strahlung) - siehe beispielsweise Fig. 3
- Erwärmen mittels Laserstrahlung - siehe beispielsweis Fig. 8 bis 10
- Erwärmen mittels Konduktion - siehe beispielsweise Fig. 11

### Erwärmen mittels Infrarotstrahlung (IR-Strahlung):

Im Folgenden werden anhand der Darstellung in den Fig. 3 Ausführungsformen der Zellkontaktsystembearbeitungsvorrichtung 10 und des Zellkontaktsystembearbeitungsverfahrens beschrieben, bei der das vorzugsweise gezielte und selektive Erwärmen von vorbestimmten Bereichen 18 des Zellkontaktsystems zum Trocknen/Aushärten aufgebrachten Flussmittels mittels IR-Strahlung 65 erfolgt. Die Flussmitteltrocknungseinrichtung 20 und/oder der Flussmitteltrocknungsbereich 26 weisen bei diesen Ausführungen einen IR-Strahler 64, 64.1, 64.2, 64.3 auf.

Beim Erwärmen mittels IR-Strahlung 65 werden zum Aufbringen der IR-Strahlung 65 IR-Strahler 64, 64.1, 64.2, 64.3 eingesetzt (wie auch in Fig. 3 beispielhaft gezeigt). Diese können je nach Anwendungsfall als flächige oder punktuelle IR-Strahler 64 ausgebildet sein. Die IR-Strahler 64, 64.1, 64.2, 64.3 können bzgl. Strahlungsleistung und Temperatur elektronisch geregelt werden. Es ist auch denkbar, die IR-Strahler 64, 64.1, 64.2, 64.3 in der Höhe verstellbar auszuführen. Dies kann entweder manuell oder über eine Steuerung 30 erfolgen. Insbesondere ist es denkbar, dass die IR-Strahler 64, 64.1, 64.2, 64.3 (zusammen oder individuell) - manuell oder mittels von einem Steuerungssystem (z.B. Teil der Steuerung 30) gesteuert - in x-, y- und z-Richtung einstellbar/verfahrbar sind.

Ferner ist es denkbar, Teilbereiche eines IR-Strahlers 64, 64.2 zumindest temporär abzuschalten, z.B. wenn das eingebrachte Zellkontaktsystem 12 kürzer ist als der IR-Strahler 64, 64.2. Dadurch kann ein Energieverbrauch gesenkt werden. In Fig. 3 ist zur Illustration ein IR-Strahler 64.1 vollständig eingeschaltet dargestellt, ein weiterer IR-Strahler 64.2 ist mit deaktivierten Teilbereichen dargestellt und ein weiterer IR-Strahler 64.3 ist ausgeschaltet.

Darüber hinaus ist es denkbar, für das Aushärten/Trocknen des Flussmittels, insbesondere mittels flächiger IR-Strahler 64, sogenannte Maskierungen (nicht dargestellt) vorzusehen, um bestimmte Bereiche des Zellkontaktsystems 12 vor der IR-Strahlung 65 zu schützen, bzw. den Einwirkungsgrad der IR-Strahlung 65 auf bestimmte Bereiche zu reduzieren. So können Bereiche des Zellkontaktsystems 12, die temperaturempfindliche und/oder gegenüber IR-Strahlung 65 empfindliche Materialen aufweisen, vor Schäden geschützt werden.

Das Trocknen des Flussmittels mittels IR-Strahlung 65 ist insbesondere kostengünstig und einfach umsetzbar. Durch das Vorsehen von Maskierungen können, sofern erforderlich, bestimmte Bereich des Zellkontaktsystems 12 von der IR-Strahlung 65 abgeschirmt werden, und so verhindert werden, dass diese durch die IR-Strahlung 65 geschädigt werden. Ferner ist es möglich, eine in den IR-Strahler 64 integrierte Kühlung (zur Kühlung des IR-Strahlers selbst) auch zur Bauteilkühlung zu nutzen, indem die IR-Strahlung 65 des IR-Strahlers 64 deaktiviert wird, die integrierte Kühlung jedoch weiterhin aktiv ist.

### Erwärmen mittels Laserstrahlung:

Im Folgenden werden anhand der Darstellung in den Fig. 8 bis 10 Ausführungsformen der Zellkontaktsystembearbeitungsvorrichtung 10 und des Zellkontaktsystembearbeitungsverfahrens beschrieben, bei der das vorzugsweise gezielte und selektive Erwärmen von vorbestimmten Bereichen 18 des Zellkontaktsystems zum Trocknen/Aushärten aufgebrachten Flussmittels mittels Laserstrahlung 70 erfolgt. Die Flussmitteltrocknungseinrichtung 20 und/oder der Flussmitteltrocknungsbereich 26 weisen bei diesen Ausführungen eine Laserstrahlungsquelle 68 auf.

Zur Vermeidung des Problems resultierend aus einer flächigen Bestrahlung kommen bei einigen Ausführungsformen Laserstrahlprozesse zur Anwendung, die eine lokale Beschränkung der Energieeinbringung auf individuell definierte Bereiche ermöglichen (siehe Fig. 8). Damit kann die thermische Energie, resultierend aus der Laserstrahlung 70, auf die zu bestrahlenden Bereiche gelenkt werden.

Fig. 8 zeigt eine schematische und beispielhafte Darstellung eines Lasersystems, das eine lokale Beschränkung der Energieeinbringung auf individuell definierte Bereiche ermöglicht.

Bei einigen Ausführungsformen weist die Laserstrahlungsquelle 68 (Beispiel: Lasersystem) hierzu eine Kombination einer Laseroptik 72, beispielsweise mit Fokusierlinse, mit einem (oder mehreren) diffraktiven optischen Element (kurz: DOE 74) auf.

Die Laseroptik 72 kann als eine sogenannte Scanneroptik oder als eine sogenannte Festoptik ausgeführt sein.

Die Scanneroptik kann die Laserstrahlung 70 mittels in der Scanneroptik verbauter Spiegel im gesamten Arbeitsbereich des Scanfeldes positionieren. Die Festoptik ermöglicht keine Variation/Umlenkung der Laserstrahlung 70. Man kann also auch sagen, dass die Scanneroptik eine gewisse Variation bzw. Bewegung der Laserstrahlung 70 innerhalb des durch die Scanneroptik vorgegebenen Scanfeldes ermöglicht, während die Festoptik die Laserstrahlung 70 stationär (ohne Variation bzw. Bewegung) ausgibt.

In Fig. 8 ist die Abstrahlung eines Laserstrahls der Laserstrahlung 70 auf einen auf einer Fläche abgebildeten Laserspot 76 gezeigt.

Unabhängig von der Art der Laseroptik 72 ist es durch das DOE 74 möglich, die von der Laseroptik 72 ausgegebene Laserstrahlung 70 derart zu brechen/abzulenken, dass die Laserstrahlung 70 in eine vorbestimmte Anzahl an Teillaserstrahlen (= Multispot Array) unterteilt wird und/oder eine vorbestimmte Fläche mit vorbestimmter Kontur auf der zu bestrahlenden Fläche 78 bildet (siehe Fig. 9).

Fig. 9 zeigt eine schematische und beispielhafte Darstellung eines Lasersystems zur Erzeugung einer Multispot Array mit sechs Teillaserstrahlen sowie die auf der Fläche 78 abgebildeten Laserspots 76 der jeweiligen Teillaserstrahlen.

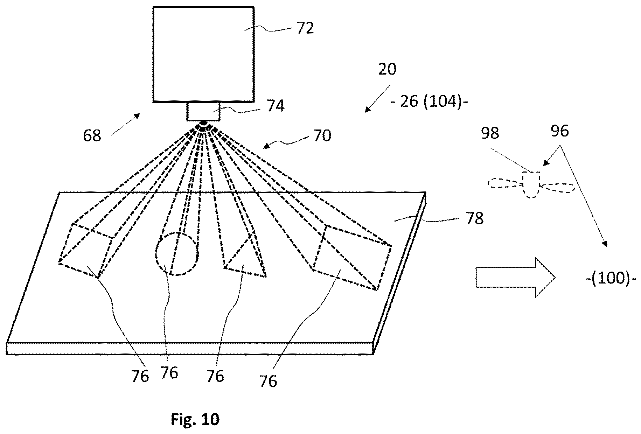

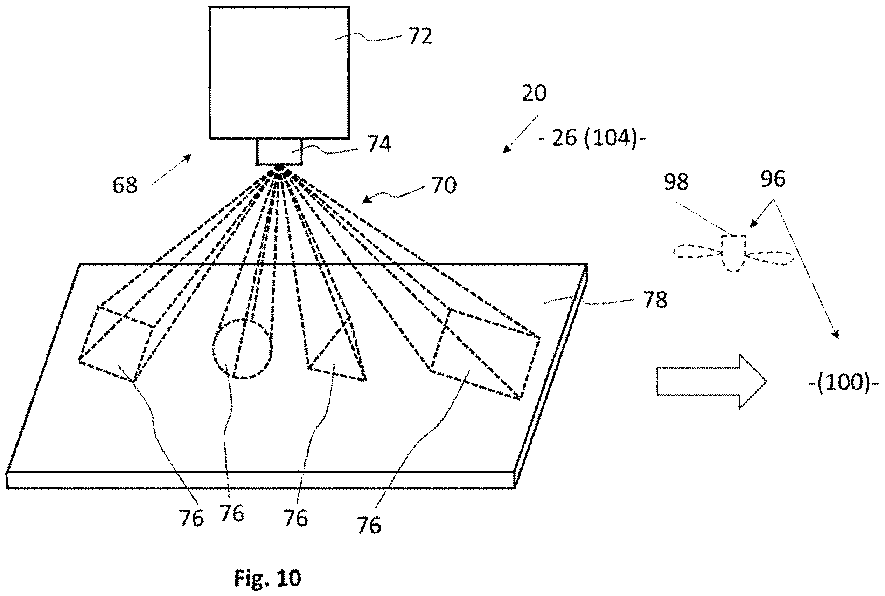

Die vorbestimmte Anzahl und/oder die vorbestimmte Fläche und/oder die vorbestimmte Kontur kann hierbei durch die Gestaltung des DOE 74 beliebig gewählt werden. So ist es möglich, mehrere Teillaserstrahlen vorzusehen, die sich in Fläche und/oder Kontur sowie im Abstand zueinander unterscheiden können (siehe Fig. 10). Fig. 10 zeigt eine schematische und beispielhafte Darstellung eines Lasersystems zur Erzeugung einer Multispot Array mit vier Teillaserstrahlen, deren auf der Fläche abgebildeten Laserspots 76 sich in Flächeninhalt und Kontur unterscheiden.

Mit anderen Worten kann man sagen, dass der geometrischen Konturausformung (Konturverlauf sowie Größe der Auftrefffläche) der über das DOE 74 zu formenden Geometrie quasi keine Grenzen gesetzt sind. Das bedeutet, dass die diffraktiven optischen Elemente 74 derart konfiguriert sein können, dass ein Multispot Array abgebildet wird, das aus einer frei wählbaren Anzahl an Einzelflächen mit individuell einstellbarer Größe und/oder mit individuellem Abstand zueinander und/oder mit individueller Kontur ausgebildet ist. Die Abstände der Einzelspots 76 sowie deren Größen kann in allen Fällen variieren und individuell gestaltet werden.

Für die Bestrahlung der mit Flussmittel beaufschlagten Bereiche am Zellkontaktsystem 12 (=ZKS) werden diese bzgl. Konturverlauf und Größe durch die Verwendung eines entsprechend gestalteten DOEs 74 mit dem Laserstrahl 70 entsprechend nachgebildet. Insbesondere können auch rechteckige oder quadratische Konturen abgebildet werden.

Die geometrische Formung sowie deren serielle Duplizierung von Laserstrahlung 70 mittels diffraktiver optischer Elemente 74 zur Abbildung von geometrischen Freiformflächen wird im Bereich der additiven Fertigung zum Laserstrahlschmelzen im Pulverbett eingesetzt. Hierbei ist eine Vielzahl von Einzelspots notwendig, um hohe Flächenraten in der generativen Fertigung abbilden zu können.

Zum Aushärten des Flussmittels wird der Laserstrahl 70 mittels der Fokussierung durch die Laseroptik 72 und das DOE 74 geometrisch derart geformt, dass eine flächige Bestrahlung, insbesondere begrenzt auf den Bereich, in dem das Flussmittel auf das Zellkontaktsystem 12 aufgetragen ist, resultiert. Hierfür wird der Laserstrahl 70 gezielt auf den Bereich, in dem das Flussmittel aufgetragen ist, aufgeweitet, um möglichst nur diesen Bereich und das dort aufgetragene Flussmittel gezielt auf eine Vorgabetemperatur (insbesondere die Arbeitstemperatur) zu erwärmen und gleichzeitig eine thermische Überlastung zu vermeiden. Damit kann eine flächige Bestrahlung mit homogenen Intensitätsprofil über die gesamte Fläche der Einzelspots 76 realisiert werden, und Intensitätsspitzen bedingt durch Nebenmaximas, wie sie bei einer einfachen Defokussierung des Laserstrahls 70 auftreten können, vermieden werden.

Die Defokussierung beschreibt die Anpassung der Größe der durch den Laser bestrahlten Fläche durch Variation des Abstandes zwischen der Laseroptik 72 und der durch den Laser zu bestrahlenden Fläche 78. Dabei wird die zu bestrahlende Fläche 78 zwischen Laseroptik 72 und Fokusebene (= Ebene, in der der Laserstrahl den kleinsten Durchmesser aufweist) des Laserstrahls 70 angeordnet.

Normalerweise hat der Laserstrahl 70 im Bereich des Austritts aus der Laseroptik 72 einen Durchmesser, der sich bis zur Fokusebene hin kontinuierlich (kegelformähnlich) verjüngt. Durch die Kombination der Laseroptik 72 mit einem DOE 74 hat der Laserstrahl 70 im Bereich des Austritts einen Durchmesser, der sich mit zunehmendem Abstand von dem Austrittsbereich vergrößert.

Damit wird hierbei gegensätzlich zur Strahlfokussierung bei klassischen Verfahren in der Lasermaterialbearbeitung, bei denen der Laserstrahl 70 mit einem minimalen Brennfleck auf das Werkstück fokussiert wird, mit der Laserstrahlung 70 gearbeitet. Bei der klassischen Strahlfokussierung wird der Strahl ausgehend von einem großen Durchmesser auf einen sehr kleinen Brennfleck fokussiert, um die maximale Intensität abbilden zu können. Bei der zum Aushärten des Flussmittels verwendeten Laserstrahlung 70, wird diese durch ein Aufweiten des Laserstrahls 70 auf einen bestimmten Bereich (insbesondere größer als der Brennfleck der klassischen Strahlfokussierung) derart aufgebracht, dass in dem gesamten Bereich ein im Wesentlichen homogener Energieeintrag, insbesondere ohne das Auftreten von Energiespitzen (= Nebenmaximas) , und somit ein gleichmäßiges Erwärmen des Materials in diesem Bereich, mittels der Laserstrahlung 70 möglich ist.

Darüber hinaus ist Trocknen mittels Laserstrahlung deutlich effizienter als mit Konvektionsöfen, da der elektrische Wirkungsgrad (=Effizienz) der Laserstrahlquellen > 50% beträgt und damit (deutlich) höher liegt als ein durch Konvektion zu erreichender Wirkungsgrad.

Die genannten technischen Lösungsmöglichkeiten ermöglichen eine geometrische Begrenzung des Energieeintrages auf das auszuhärtende Flussmittel, da die Fläche der Bestrahlung über optische Maßnahmen der Strahlführung sowie der Temperatur-Zeit-Verlauf über die Leistungs- und Zeitvorgabe des Laserstrahlemission geregelt werden kann.

### Erwärmen mittels Konduktion:

Im Folgenden werden anhand der Darstellung in Fig. 11 Ausführungsformen der Zellkontaktsystembearbeitungsvorrichtung 10 und des Zellkontaktsystembearbeitungsverfahrens beschrieben, bei der das vorzugsweise gezielte und selektive Erwärmen von vorbestimmten Bereichen 18 des Zellkontaktsystems zum Trocknen/Aushärten aufgebrachten Flussmittels mittels Konduktion erfolgt. Die Flussmitteltrocknungseinrichtung 20 und/oder der Flussmitteltrocknungsbereich 26 weisen bei diesen Ausführungen wenigstens eine Heizeinrichtung 80 auf, die dazu ausgebildet ist, den zumindest einen vorbestimmten Bereich 18 zu kontaktieren, um ihn mittels Konduktion aufzuwärmen.

Beispielsweise wird bei einigen Ausführungsformen, von denen ein Beispiel in Fig. 11 gezeigt ist, zum konduktiven Erwärmen je Zellkontaktsystem 12 eine Platte 82 vorgesehen, die eine als Gegenkontur (Negativform) zur Geometrie/Kontur einer Unterseite des Zellkontaktsystems 12 ausgebildete Auflagefläche 84 aufweisen. In diesen Platten 82 können Heizelemente 86, insbesondere elektrische Heizpatronen, in den Bereichen vorgesehen sein, die beim Auflegen des Zellkontaktsystems 12 auf die Platten 82 in etwa den Bereichen mit dem aufgetragenen Flussmittel entsprechen (siehe Fig. 11). Daher können die Platten 82 auch als Heizplatten bezeichnet werden.

Fig. 11 zeigt eine schematische und beispielhafte Darstellung zur konduktiven Erwärmung eines Sollbruchstellenbereichs 62 eines Zellkontaktsystems 12 mittels beheizter Platte 82.

Insbesondere ist eine Zellkontakteinheit 14 des Zellkontaktsystems 12 mit Anodenkontaktbereich 58, Kathodenkontaktbereich 60 und Sollbruchstellenbereich 62 als mit Flussmittel versehener vorbestimmter Bereich 18 dargestellt. Die Oberfläche mit Flussmittel (dieses ist explizit nicht dargestellt) ist mit dem Bezugszeichen 88 gekennzeichnet. Der Plattenbereich mit der zur Unterseite des vorbestimmten Bereiches 18 komplementärer Kontur ist bei dem Bezugszeichen 84 (Auflagefläche) dargestellt. Dort befindet sich auch der Plattenbereich 90, der durch das integrierte Heizelement 86 beheizt wird. Die Pfeile 92 verdeutlichen die Wärmeleitung von dem beheizten Plattenbereich 90 in den Sollbruchstellenbereich 62.

Das Zellkontaktsystem 12 - insbesondere deren gerade zu bearbeitende Zellkontakteinheit 14 - wird bei einigen Ausführungsformen durch optionale Niederhalter 94 in Kontakt mit der Platte 82 gehalten.

Um den thermischen Kontakt zwischen der Platte 82 und dem Zellkontaktsystem 12 zu verbessern, insbesondere in den zu erwärmenden Bereichen, können demnach ein oder mehrere Niederhalter 94 vorgesehen werden, die das Zellkontaktiersystem 12 nahe der zu erwärmenden Bereiche 62, 18 gegen die Platte 82 drückt. Dadurch kann der Wärmeübergang zwischen der Platte und dem Zellkontaktsystem 12 erhöht werden.

Falls das Zellkontaktsystem 12 in dem Flussmitteltrocknungsbereich 26 auf einem Werkstückträger WT angeordnet ist, sollte der Werkstückträger WT Aussparungen aufweisen, die die zu erwärmenden Bereiche 62, 18 nach unten freilegen. Durch diese Aussparungen können die Heizplattenelemente - mit der z.B. vorspringenden Auflagefläche 84 - hindurchragen, um das Zellkontaktsystem 12 zu berühren.

Die Temperatur der Heizelemente 86 und somit die Temperatur der Platte 82 ist gut einstellbar bzw. steuerbar. So können bspw. sogenannte PTC-Heizelemente (PTC = Positive Temperature Coefficient) eingesetzt werden. Diese bestehen aus Materialien, deren elektrischer Widerstand mit steigender Temperatur stark zunimmt. Dadurch begrenzen diese Heizelemente ihre eigene Temperatur automatisch, auch ohne externe Regelung bzw. Sensor. So kann gewährleistet werden, dass das Zellkontaktsystem 12 bzw. die zu erwärmenden Bereiche 62, 18 des Zellkontaktsystems 12 nicht ungewollt zu hohen Temperaturen ausgesetzt werden, da die Temperatur des Zellkontaktsystems 12 die Temperatur der Platte 82 nicht übersteigen kann.

Auch wenn solche Platten 82 für die jeweilige Geometrie des Zellkontaktsystems 12 angepasst gefertigt werden müssen, ist die gesamte Umsetzung dennoch, insbesondere gegenüber Konvektionsöfen, vergleichsweise kostengünstig.

Gemäß Fig. 7 können einige Ausführungsformen - wie in Fig. 7 durch gestrichelte Linien dargestellt - den Schritt S6 - Kühlen des Zellkontaktsystems auf eine Zieltemperatur aufweisen.

Gemäß Fig. 3, 12 und 13 weisen einige Ausführungsformen der Zellkontaktsystembearbeitungsvorrichtung 10 eine Kühleinrichtung 96 zum Kühlen des Zellkontaktsystems 12, insbesondere nach dem Trocknen/Aushärten auf.

Wie oben erwähnt, werden nach Schritt S3 die fertig applizierten Zellkontaktsysteme 12 mit dem noch feuchten Flussmittel in den Flussmitteltrocknungsbereich 26, zur Flussmitteltrocknungseinrichtung 26 gefahren.

Bei einigen Ausführungsformen, von denen ein Beispiel in Fig. 3 dargestellt ist, erfolgt, die Trocknung mittels Infrarotstrahlung - IR-Strahlung 65 - und eine Kühlung kann mittels einer Kühleinheit der IR-Strahler 64 erfolgen.

Die Kühleinrichtung 96 weist bei einigen Ausführungsformen wenigstens einen Ventilator 98, hier insbesondere einen in den IR-Strahler 64 integrierten Ventilator 98 auf.

Die Schritte S4 und S6 werden dabei wie folgt durchgeführt.

Die Zellkontaktsysteme 12 fahren unter die z.B. als IR-Lampen ausgebildeten IR-Strahler 64. Unter den leuchtenden IR-Lampen wird das Flussmittel getrocknet. Zum Ende hin und/oder im Anschluss wird für eine bestimmte Zeit das Zellkontaktsystem mit den verbauten Ventilatoren 98 des IR-Moduls auf eine Zielendtemperatur abgekühlt. Dabei sind die IR-Strahler 64 ausgeschalten. Hierbei wird die Resttrocknung und Kühlung des Bauteils mit den IR-Ventilatoren 98 erreicht.

Bei einigen Ausführungsformen sind die IR-Ventilatoren 98 standardisiert in der IR-Moduleinheit verbaut, da diese eine zum Kühlen der Einheit vorgesehene Systemeinheit sind. Die IR-Lampen müssen während und nach jeder Anwendung aktiv gekühlt werden. Die IR-Ventilatoren 98 kühlen bei der in Fig. 3 gezeigten Ausführung die IR-Strahler 64 und die ZKS 12 zugleich.

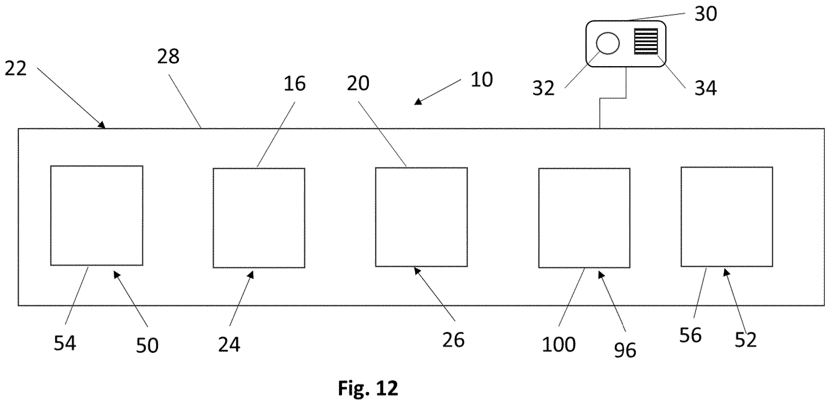

Gemäß Fig. 12 weist bei einigen Ausführungsformen der Zellkontaktsystembearbeitungsvorrichtung 10 die Kühleinrichtung 96 eine separate Kühlkammer 100 oder einen separaten Kühlbereich auf.

Beispielsweise wird in dem Flussmittelauftragsbereich 26 mit der Heizeinrichtung 80 oder mit anderen Mitteln, z.B. Strahlungsquellen 64, 68, Wärme aufgebracht. Der Bereich, in dem Wärme aufgebracht wird, kann auch als Ofenbereich 104 bezeichnet werden. Wie in Fig. 10 und 11 im jeweils rechten Bildrand dargestellt, kann anschließend die Kühlung des Zellkontaktsystems 12 mittels Ventilators 98 und/oder durch Verbringen des Zellkontaktsystems 12 in die Kühlkammer 100 auf die Zieltemperatur gekühlt werden. Ein Ausführungsbeispiel für die Kühlkammer 100 ist schematisch in Fig. 13 dargestellt.

Die Verfahrensweise ist beispielsweise wie folgt: Die Zellkontaktsysteme 12 fahren auf Werkstückträgern WT in den Ofenbereich 26, 104 ein. Die Zellkontaktsysteme 12 werden im Ofenbereich 104 getrocknet. Die Zellkontaktsysteme 12 fahren aus dem Ofenbereich 104 wieder heraus. Im Anschluss werden die Zellkontaktsysteme 12 in eine separate angestellte Kühlkammer 100 eingefahren. Diese Kühlkammer kann ein kontinuierliches Laufförderband 102 aufweisen und/oder eine angestellte Stapelbox sein. Die Kühlkammer 100 kann mehrere Zellkontaktsysteme 12 aufnehmen. Auch ein Krallsystem (nicht dargestellt) ist als Einsatz möglich. Die Zellkontaktsysteme 12 werden hinein und durchgefördert nach einer bestimmten Zeitvorgabe. Die Zellkontaktsysteme 12 und die Werkstückträger WT erreichen eine Zielendtemperatur.

Wie in Fig. 10 und 11 angedeutet kann die Kühlung mit Ventilatoren 100 selbstverständlich auch im Anschluss an die Trocknung per Laser oder im Anschluss an die punktuelle Kontaktierung durchgeführt werden. Alternativ oder zusätzlich ist die Kühlung in der Kühlkammer 100 im Anschluss an die Trocknung per Laser oder im Anschluss an die punktuelle Kontaktierung möglich. Insbesondere für die Trocknung mittels Laserstrahlung ist es denkbar, auf eine separate Bauteilkühlung zu verzichten, da die Laserstrahlung zum Trocknen so punktuell auf zu trocknende Bereiche aufgebracht werden kann, dass sich die anderen Bereiche des Bauteils nur vernachlässigbar wenig oder gar nicht aufheizen. Darüber hinaus ist es beim Trocknen mittels Laserstrahlung auch denkbar, die Bauteilkühlung, sofern vorhanden, bereits während des Trocknungsvorgangs mittels Laserstrahlung erfolgen zu lassen.

Zur Verbesserung einer Serienfertigung von Zellkontaktsystemen 12 im Rahmen der Großserienherstellung von Batterieclustern, wie sie z.B. in Batterien von Elektrofahrzeugen Verwendung finden, schafft die Erfindung eine Zellkontaktsystembearbeitungsvorrichtung 10 zum Bearbeiten von Zellkontaktsystemen 12, die zum elektrischen Verbinden von Batteriezellen zu einem Batteriecluster dienen, wobei die Zellkontaktsystembearbeitungsvorrichtung 10 eine Flussmittelaufbringeinrichtung 16, die zum selektiven Auftragen von Flussmittel auf zumindest einen vorbestimmten Bereich 18 von zumindest einem Zellkontaktsystem 12 ausgebildet ist, und eine Flussmitteltrocknungseinrichtung 20 aufweist, die zum Trocknen und/oder Aushärten des durch die Flussmittelaufbringeinrichtung 16 aufgetragenen Flussmittels durch gezieltes Aufbringen von Wärmeenergie auf den zumindest einen vorbestimmten Bereich 18 ausgebildet ist.

### Bezugszeichenliste:

- 10: Zellkontaktsystembearbeitungsvorrichtung
- 12: Zellkontaktsystem (auch Zellkontaktiersystem oder ZKS genannt)
- 14: Zellkontakteinheit (auch Zellkontaktiereinheit genannt)
- 16: Flussmittelaufbringeinrichtung
- 18: vorbestimmter Bereich
- 20: Flussmitteltrocknungseinrichtung
- 22: ZKS-Bearbeitungssystem
- 24: Flussmittelauftragbereich
- 26: Flussmitteltrocknungsbereich
- 28: Gesamtgehäuse
- 30: Steuerung
- 32: Prozessor
- 34: Speicher
- 36: Applikationseinheit
- 38: Greifsystem (oder alternativ Haltesystem)
- 40: Greifer
- 42: Dosiereinrichtung
- 43: Verfahreinheit
- 44: Sollbruchstellen
- 46: Prüfsystem
- 46.1: erstes Prüfsystem
- 46.2: zweites Prüfsystem
- 46.3: drittes Prüfsystem
- 48: Flussmittelaufbring-Prüfeinrichtung
- 50: Be- und/oder Entladebereich
- 52: Ausschleusbereich
- 54: Be- und/oder Entladeeinrichtung
- 56: Ausschleusungseinrichtung
- 58: Anodenkontaktbereich
- 60: Kathodenkontaktbereich
- 62: Sollbruchstellenbereich
- 64: IR-Strahler
- 64.1: IR-Strahler (vollständig eingeschaltet)
- 64.2: IR-Strahler (Teilbereiche deaktiviert)
- 64.3: IR-Strahler (ausgeschaltet)
- 65: IR-Strahlung
- 66: Bearbeitungsstrecken
- 68: Laserstrahlungsquelle
- 70: Laserstrahlung/Laserstrahl
- 72: Laseroptik
- 74: (Fokusierlinse mit) DOE (diffraktives optisches Element)
- 76: Laserspot/Einzelspot
- 78: Fläche
- 80: Heizeinrichtung
- 82: Platte
- 84: Auflagefläche
- 86: Heizelement
- 88: Oberfläche mit Flussmittel
- 90: beheizter Plattenbereich
- 92: Wärmeleitung von beheiztem Plattenbereich in Sollbruchstellenbereich
- 94: Niederhalter (optional)
- 96: Kühleinrichtung
- 98: Ventilator
- 100: Kühlkammer
- 102: Laufförderband
- 104: Ofenbereich
- E: Ebene
- WT: Werkstückträger
- S1: Zuführen Zellkontaktsystem
- S2: Aufbringen Flussmittel
- S3: Überführen zu Flussmitteltrocknungseinrichtung
- S4: Trocknen/Aushärten Flussmittel
- S5: Entnehmen des das ausgehärtete Flussmittel aufweisenden wenigstens einen Zellkontaktsystems
- S6: Kühlen Zellkontaktsystem

## Patentansprüche

1. Zellkontaktsystembearbeitungsvorrichtung (10) zum Bearbeiten von Zellkontaktsystemen (12), die zum elektrischen Verbinden von Batteriezellen zu einem Batteriecluster dienen, wobei die Zellkontaktsystembearbeitungsvorrichtung (10) eine Flussmittelaufbringeinrichtung (16), die zum selektiven Auftragen von Flussmittel auf zumindest einen vorbestimmten Bereich (18) von zumindest einem Zellkontaktsystem (12) ausgebildet ist, und eine Flussmitteltrocknungseinrichtung (20) aufweist, die zum Trocknen und/oder Aushärten des durch die Flussmittelaufbringeinrichtung (16) aufgetragenen Flussmittels durch gezieltes Aufbringen von Wärmeenergie auf den zumindest einen vorbestimmten Bereich (18) ausgebildet ist.

2. Zellkontaktsystembearbeitungsvorrichtung (10) nach Anspruch 1, **dadurch gekennzeichnet**,
2.1 dass die Flussmittelaufbringeinrichtung (16) und die Flussmitteltrocknungseinrichtung (20) gemeinsam in einem Gesamtgehäuse (28) angeordnet sind und/oder
2.2 dass die Zellkontaktsystembearbeitungsvorrichtung (10) als geschlossenes Gesamtsystem (22) ausgebildet ist, in dem die Einrichtungen (16, 20, 48, 54, 56) der Zellkontaktsystembearbeitungsvorrichtung (10) integriert sind.

3. Zellkontaktsystembearbeitungsvorrichtung (10) nach Anspruch 1 oder 2, **dadurch gekennzeichnet,**
**dass** die Flussmittelaufbringeinrichtung (16)
3.1 in einem Flussmittelauftragbereich (24) der Zellkontaktsystembearbeitungsvorrichtung (10) angeordnet ist; und/oder
3.2 zum automatisierten, insbesondere computergesteuerten, Aufbringen des Flussmittels auf den zumindest einen vorbestimmten Bereich (18) ausgebildet ist; und/oder
3.3 eine Applikationseinheit (36) aufweist, die relativ zu dem zumindest einen Zellkontaktsystem (12) beweglich ausgebildet ist; und/oder
3.4 eine Flussmittelaufbring-Prüfeinrichtung (48) aufweist, die dazu eingerichtet ist, die Position(en) des zumindest einen vorbestimmten Bereichs (18), auf die das Flussmittel aufzubringen ist, zu bestimmen und/oder eine Position, eine Auftragsfläche und/oder einen Konturverlauf des aufgebrachten Flussmittels zu bestimmen oder zu prüfen.

4. Zellkontaktsystembearbeitungsvorrichtung (10) nach Anspruch 3, mindestens umfassend Alternative 3.3, **dadurch gekennzeichnet,**
**dass** die Applikationseinheit (36)
4.1 wenigstens ein Greifsystem (38) aufweist, das in allen Raumrichtungen verstellbar oder verfahrbar ist; und/oder
4.2 wenigstens eine Dosiereinrichtung (42) zum Aufbringen von Flussmittel aufweist; und/oder
4.3 eine erste und eine zweite Dosiereinrichtung (42) zum Aufbringen von Flussmittel aufweist, wobei die erste und die zweite Dosiereinrichtung (42) relativ zueinander beweglich ausgebildet sind, insbesondere derart
4.3.1 dass jede Dosiereinrichtung (42) gemeinsam und nochmals für sich verstellbar ist und/oder
4.3.2 die Dosiereinrichtungen (42) parallel, synchron oder asynchron gesteuert bewegbar sind oder
4.3.3 die Dosiereinrichtungen (42) einzeln gesteuert bewegbar sind; und/oder
4.4 eine Verfahreinheit (43) aufweist, die dazu eingerichtet ist, die Applikationseinheit (36) oder ein Element derselben, wie insbesondere ein Greifsystem (38), oder eine oder mehrere Dosiereinrichtungen (42),
4.4.1 mit einer Verfahrgeschwindigkeit von bis zu 3000 mm/s, insbesondere zwischen 300 mm/s und 950 mm/s, weiter insbesondere zwischen 450 mm/s bis 750 mm/s zu verfahren und/oder
4.4.2 während eines Flussmittelauftrags zu verfahren.

5. Zellkontaktsystembearbeitungsvorrichtung (10) nach Anspruch 3, mindestens umfassend Alternative 3.4, oder nach Anspruch 3, mindestens umfassend Alternative 3.4 und Anspruch 4, **dadurch gekennzeichnet,**
**dass** die Flussmittelaufbring-Prüfeinrichtung (48)
5.1 an der Applikationseinheit (36) angeordnet ist oder separat davon ausgeführt ist; und/oder
5.2 wenigstens eine Kamera und/oder einen Sensor als Prüfeinheit aufweist; und/oder
5.3 beweglich ausgebildet ist und dazu eingerichtet ist, eine Prüfung während der Bewegung durchzuführen; und/oder
5.4 eine Profilerfassungseinheit zur Erfassung wenigstens eines Profils oder einer Kontur des zu prüfenden Zellkontaktsystems (12) aufweist; und/oder
5.5 eine in einer Bewegungsrichtung vor einer Dosiereinrichtung (42) zum Aufbringen des Flussmittels angeordnete Prüfeinheit aufweist; und/oder
5.6 eine in einer Bewegungsrichtung nach einer Dosiereinrichtung (42) zum Aufbringen des Flussmittels angeordnete Prüfeinheit aufweist.

6. Zellkontaktsystembearbeitungsvorrichtung (10) nach einem der voranstehenden Ansprüche, **dadurch gekennzeichnet,**
**dass** die Flussmitteltrocknungseinrichtung (20)
6.1 in einem Flussmitteltrocknungsbereich (26) der Zellkontaktsystembearbeitungsvorrichtung (10) angeordnet ist; und/oder
6.2 dazu eingerichtet ist, das auf das wenigstens eine Zellkontaktsystem (12) aufgebrachte Flussmittel zu trocknen oder auszuhärten; und/oder
6.3 wenigstens eine Flussmitteltrocknungs-Prüfeinrichtung (46.3) aufweist, die dazu eingerichtet ist, Positionen, Auftragsfläche und/oder den Konturverlauf des auf die Bereiche aufgebrachten Flussmittels vor und/oder nach dem Trocknungsvorgang mittels einer oder mehrerer Prüfeinheiten zu prüfen.

7. Zellkontaktsystembearbeitungsvorrichtung (10) nach einem der voranstehenden Ansprüche, **dadurch gekennzeichnet,**
**dass** die Flussmitteltrocknungseinrichtung (20)
7.1 eine Strahlungsquelle (64, 68) zum Aussenden von Strahlung (65, 70) zur Erzeugung von Wärmeenergie auf den zumindest einen vorbestimmten Bereich (18) aufweist, wobei die Strahlungsquelle (64, 68)
7.1.1 wenigstens eine Lichtquelle (64, 68) zum Ausstrahlen von Licht (65, 70) auf zumindest die vorbestimmten Bereiche (18) aufweist; oder
7.1.2 wenigstens eine IR-Strahlungsquelle (64) zum Ausstrahlen von IR-Strahlung (65) auf zumindest die vorbestimmten Bereiche (18) aufweist; oder
7.1.3 wenigstens eine Laserstrahlungsquelle (68) zum selektiven Aussenden von Laserstrahlung (70) auf die vorbestimmten Bereiche (18) aufweist; und/oder
7.2 wenigstens eine Maske oder Blende zum Ausblenden von Strahlung (65, 70) auf nicht zu bearbeitende Bereiche der Zellkontaktsysteme (12) aufweist.

8. Zellkontaktsystembearbeitungsvorrichtung (10) nach einem der Ansprüche 1 bis 6, **dadurch gekennzeichnet,**
**dass** die Flussmitteltrocknungseinrichtung (20) wenigstens eine Heizeinrichtung (80) aufweist, die dazu ausgebildet ist, den zumindest einen vorbestimmten Bereich (18) zu kontaktieren, um ihn mittels Konduktion aufzuwärmen.

9. Zellkontaktsystembearbeitungsvorrichtung (10) nach Anspruch 7, Alternative 7.1.3, **dadurch gekennzeichnet,**
**dass** die Laserstrahlungsquelle (68)
9.1 eine Strahlformungseinheit (72, 74) aufweist, die dazu eingerichtet ist, den Laserstrahl (70) aufzuteilen und/oder entsprechend der Anzahl, Form und/oder Verteilung der vorbestimmten Bereiche (18) zu formen; und/oder
9.2 eine Laseroptik (72) und wenigstens ein diffraktives optisches Element (74) aufweist; und/oder
9.3 eine Scanneroptik oder eine Festoptik aufweist; und/oder
9.4 eine Laseroptik (72) aufweist, die dazu eingerichtet ist, die Laserstrahlung (70) auf den wenigstens einen vorbestimmten Bereich (18) zu positionieren; und/oder
9.5 ein Element (74) aufweist, das dazu eingerichtet ist, Laserstrahlung (70) derart zu brechen/abzulenken, dass die Laserstrahlung (70) in eine vorbestimmte Anzahl an Teillaserstrahlen unterteilt wird und/oder eine vorbestimmte Fläche (76) mit vorbestimmter Kontur auf der zu bestrahlenden Fläche (78) bildet, die abhängig von der Fläche und der Kontur des jeweiligen vorbestimmten Bereichs (18) mit Flussmittelauftrag ausgebildet ist; und/oder
9.6 dazu ausgebildet ist, die mit Flussmittel versehene Fläche (18, 62, 88) homogen mit Laserstrahlung (70) zu beaufschlagen.

10. Zellkontaktsystembearbeitungsvorrichtung (10) nach Anspruch 3, Alternative 3.1 und Anspruch 6, Alternative 6.1, **gekennzeichnet durch** mehrere Bearbeitungsstrecken (66, E), die übereinander und/oder nebeneinander **durch** den Flussmittelauftragbereich (24) und den Flussmitteltrocknungsbereich (26) verlaufen, um mehrere Zellkontaktsysteme (12) parallel oder zumindest teilweise zeitlich überlappend mit der Flussmittelaufbringeinrichtung (16) und der Flussmitteltrocknungseinrichtung (20) zu bearbeiten.

11. Zellkontaktsystembearbeitungsvorrichtung (10) nach einem der voranstehenden Ansprüche, **gekennzeichnet durch**
11.1 eine Be- und/oder Entladeeinrichtung (54), die dazu eingerichtet ist, das zumindest eine Zellkontaktsystem (12) zur Bearbeitung **durch** die Zellkontaktsystembearbeitungsvorrichtung (10) aufzunehmen, und/oder das zumindest eine fertig bearbeitete Zellkontaktsystem (12) zu entladen; und/oder
11.2 eine Ausschleusungseinrichtung (56), die dazu eingerichtet ist, zumindest ein mängelbehaftetes Zellkontaktsystem (12), das bei einer Prüfung in dem Zellkontaktsystembearbeitungsvorrichtung (10) aussortiert worden ist, aufzunehmen, um es einer Nachbearbeitung oder einer Entsorgung zuzuführen; und/oder 11.3 eine Kühleinrichtung (96) zum Kühlen des zumindest einen Zellkontaktsystems (12) nach dem Trocknen oder Aushärten.

12. Zellkontaktsystembearbeitungsvorrichtung (10) nach Anspruch 11, **dadurch gekennzeichnet**,
12.1 dass die Ausschleusungseinrichtung (56) dazu eingerichtet ist, wahlweise auch zum Beladen der Zellkontaktsystembearbeitungsvorrichtung (10) mit mindestens einem zu bearbeitenden Zellkontaktsystem (12) und/oder zum Entladen des zumindest einen bearbeiteten Zellkontaktsystems (12) eingesetzt zu werden und/oder
12.2 dass die Kühleinrichtung (96) eine Kühleinheit aus der Gruppe aufweist, die wenigstens einen Ventilator (98), eine in eine Strahlungsquelle (64) integrierte, separat ansteuerbare Kühlung, einen in eine Strahlungsquelle (64) integrierten Ventilator (98), eine Kühlkammer (100), einen Kühlbereich mit einem kontinuierlichen Laufförderband (102) und eine angestellte Stapelbox mit Kühlung umfasst.

13. Verwendung einer Zellkontaktsystembearbeitungsvorrichtung (10) nach einem der voranstehenden Ansprüche zum Aufbringen von Flussmittel auf thermische Sollbruchstellen (44) des wenigstens einen Zellkontaktsystems (12).

14. Verwendung nach Anspruch 13, wobei das zumindest eine Zellkontaktsystem (12) wenigstens einen Anodenkontaktbereich (58) zur Kontaktierung einer Anode einer Batteriezelle und einen Kathodenkontaktbereich (60) zur Kontaktierung einer Kathode einer Batteriezelle aufweist und wenigstens einen Sollbruchstellenbereich (62) mit einer Sollbruchstelle (44) aufweist, wobei der Sollbruchstellenbereich (62) den Anodenkontaktbereich (58) oder einen von mehreren Anodenkontaktbereichen (58) mit dem Kathodenkontaktbereich (60) oder einem von mehreren Kathodenkontaktbereichen (60) elektrisch und physisch verbindet.

15. Zellkontaktsystembearbeitungsverfahren zum Bearbeiten von Zellkontaktsystemen (12), die zum elektrischen Verbinden von Batteriezellen zu einem Batteriecluster dienen, um Flussmittel auf vorbestimmte Bereiche (18) der Zellkontaktsysteme (12) aufzubringen und zu trocknen; umfassend
Bereitstellen einer Zellkontaktbearbeitungsvorrichtung (10) nach einem der Ansprüche 1 bis 12 und die folgenden Schritte:
S1 Zuführen wenigstens eines Zellkontaktsystems (12) zu der Flussmittelaufbringeinrichtung (16);
S2 Aufbringen von Flussmittel in definierter Menge auf wenigstens einen vorbestimmten Bereich (18) des wenigstens einen Zellkontaktsystems (12);
S3 Überführen des wenigstens einen Zellkontaktsystems (12), auf das das Flussmittel aufgebracht ist, zu der Flussmitteltrocknungseinrichtung (20);
S4 Trocknen/Aushärten des Flussmittels durch Erwärmen zumindest des wenigstens einen mit dem Flussmittel versehenen Bereiches (18) des Zellkontaktsystems (12) für ein vorbestimmtes Zeitintervall auf eine vorbestimmte Temperatur; und
S5 Entnehmen des das ausgehärtete Flussmittel aufweisenden wenigstens einen Zellkontaktsystems (12).

16. Zellkontaktsystembearbeitungsverfahren nach Anspruch 15, wobei
16.1 Schritt S1 und/oder Schritt S5 automatisiert durchgeführt werden; und/oder
16.2 Schritt S1 positionsgenaues Zuführen des wenigstens einen Zellkontaktsystems (12) umfasst; und/oder
16.3 wenigstens einer oder mehrere der Schritte S1 bis S4 einen Prüfschritt zum Prüfen von Position, Fläche, Ausrichtung, Kontur und/oder Verlauf des Zellkontaktsystems (12), des vorbestimmten Bereichs (18) und/oder des Flussmittels aufweist; und/oder
16.4 Schritt S4 selektives Aufbringen von Strahlung zur Wärmeerzeugung lediglich auf den vorbestimmten Bereich (18) umfasst.

17. Computerimplementierte Steuerung (30) für eine Zellkontaktsystembearbeitungsvorrichtung (10) nach einem der Ansprüche 1 bis 12, wobei die Steuerung (30) dazu eingerichtet ist, die Zellkontaktsystembearbeitungsvorrichtung (10) zum Durchführen des Zellkontaktsystembearbeitungsverfahrens nach einem der Ansprüche 15 oder 16 anzusteuern.
